# EUROPÄISCHE PATENTSCHRIFT

(11) **EP 4 384 653 B1**
(45) Veröffentlichungstag und Bekanntmachung des Hinweises auf die Patenterteilung: **16.07.2025**
(21) Anmeldenummer: 22768608.6
(22) Anmeldetag: 11.08.2022
(51) Int. Cl.: C25B 1/04, C25B 9/05, C25B 9/70, C25B 9/19, C25B 9/60, C25B 9/77

(54) **ZELLRAHMEN FÜR EINE ELEKTROLYSEZELLE**
CELL FRAME FOR AN ELECTROLYTIC CELL
CADRE DE CELLULE POUR CELLULE ÉLECTROLYTIQUE

(30) Priorität: 13.08.2021 AT 506622021
(43) Veröffentlichungstag der Anmeldung: 19.06.2024
(73) Patentinhaber: H2i GreenHydrogen GmbH, 4702 Wallern an der Trattnach (AT)
(72) Erfinder: NEUBACHER, Dietmar, 8044 Graz (AT); CERMENEK, Bernd, 8041 Graz (AT)
(74) Vertreter: Burger, Hannes
(86) Internationale Anmeldenummer: PCT/AT2022/060281
(87) Internationale Veröffentlichungsnummer: WO 2023/015331

(56) Entgegenhaltungen:
- EP-A1- 0 629 015
- EP-A1- 1 114 486
- EP-A1- 2 768 056
- JP-A- 2013 173 995
- US-A- 6 117 287
- US-A1- 2021 066 762

## Beschreibung

Die Erfindung betrifft eine Elektrolysezelle zur Erzeugung von gasförmigem Wasserstoff, welche entlang einer Zellachse angeordnet zumindest eine Anionen-Austauschermembran, zumindest einen ersten Zellrahmen und zumindest einen zweiten Zellrahmen umfasst. Die vorliegende Erfindung zeichnet sich durch eine besonders einfache und dennoch für den Prozess der Elektrolyse vorteilhafte Ausgestaltung der Elektrolysezelle aus.

In der EP2898115B1 wird ein Zellrahmen für einen Elektrolyseblock, insbesondere zur alkalischen Wasserelektrolyse, mit einer vorderseitigen Abfuhrkanalstruktur und einer rückseitigen Abfuhrkanalstruktur gezeigt. Der Zellrahmen ist aus einem Material mit Dichtungseigenschaften gebildet und weist Dichtungswülste sowie an einer gegenüberliegenden Seite korrespondierende Dichtungseinkerbungen auf. Der Zellrahmen weist weiters Produktgasabfuhrstrukturen zum getrennten Abführen zweier Produktgase durch Produktgasabfuhr-Durchgangsöffnungen und Abfuhrkanäle auf, wobei die Produktgasabfuhr-Durchgangsöffnungen gegeneinander um einen vorgegebenen Winkel in Umfangsrichtung versetzt am Zellrahmen ausgebildet sind, insbesondere um einen Winkel zwischen 5° und 60°. Hinsichtlich der Einfachheit der Ausgestaltung der verwendeten Zellrahmen und besonders hinsichtlich der Verwendung der Zellrahmen in einem Elektrolyseblock zur Durchführung des Prozesses der Elektrolyse zeigt diese Offenbarung nur eine bedingt zufriedenstellende technische Lösung.

Weiters wird in der EP3696298A1 ein Zellrahmen für einen Elektrolyse- oder Brennstoffzellenblock mit einer Mehrzahl von Sammelkanalöffnungen, die zur Medienzuführung und Medienabführung durch den Zellrahmen hindurch eingerichtet sind, beschrieben. Dabei umfasst der offenbarte Zellrahmen eine Verteilerkanalstruktur, die zur Medienzuführung von einer jeweiligen zuführenden Sammelkanalöffnung zu einem zugeordneten Halbraum angrenzend an die Aufnahmeöffnung und zur Medienabführung aus diesem Halbraum zu einer zugeordneten, abführenden Sammelkanalöffnung eingerichtet ist. Diese offenbarte Ausführungsform eines Zellrahmens ist hinsichtlich der Einfachheit der Ausführung und hinsichtlich der Effektivität der Medienzuführung und Medienabführung nur bedingt zufriedenstellend.

Aufgabe der vorliegenden Erfindung war es, die Nachteile des Standes der Technik zu überwinden und eine Elektrolysezelle zur Verfügung zu stellen, welche besonders einfach herstellbar ist, wobei gleichzeitig der physikalische Prozess der Elektrolyse möglichst effizient ablaufen soll.

Diese Aufgabe wird durch eine Elektrolysezelle gemäß den Ansprüchen gelöst.

Die erfindungsgemäße Elektrolysezelle zur Erzeugung von gasförmigem Wasserstoff umfasst entlang einer Zellachse angeordnet zumindest eine Anionen-Austauschermembran, zumindest einen ersten Zellrahmen und zumindest einen zweiten Zellrahmen. Vorzugsweise ist die Zellachse horizontal ausgerichtet. Die Zellrahmen umgrenzen jeweils einen Innenbereich, der zur Aufnahme eines Elektrolyten und/oder einer Membran-Elektrodeneinheit vorgesehen ist. Die Membran-Elektrodeneinheit wird von der Anionen-Austauschermembran und zumindest einer Elektrode und/oder einer Diffusionsschicht gebildet. Zweckmäßig ist es, wenn die Membran-Elektrodeneinheit auf einer ersten Flachseite der Anionen-Austauschereinheit eine erste Elektrode aufweist und auf einer zweiten der ersten Flachseite gegenüberliegenden Flachseite der Anionen-Austauschermembran eine zweite Elektrode aufweist, wobei eine der Elektroden im Prozess der Elektrolyse als Kathode fungiert und die andere Elektrode als Anode fungiert. Mittels der Diffusionsschicht wird eine elektrisch leitende Verbindung zwischen eine Flachseite einer Bipolarplatte und einer der Bipolarplatte nächstliegend angeordneten Elektrode gewährleistet, wobei gleichzeitig Elektrolyt durch die Diffusionsschicht diffundieren kann.

Der zumindest eine erste Zellrahmen und der zumindest eine zweite Zellrahmen sind derart angeordnet, dass diese in Bezug auf deren jeweils aufgespannte Rahmenebene in Richtung der Zellachse beabstandet angeordnet sind, wobei der erste Zellrahmen auf einer ersten Flachseite der Anionen-Austauschermembran mittelbar oder unmittelbar flüssigkeits- und gasabdichtend anliegt und der zweite Zellrahmen auf einer gegenüberliegenden zweiten Flachseite der Anionen-Austauschermembran mittelbar oder unmittelbar flüssigkeits- und gasabdichtend anliegt. Es sei auch die Möglichkeit vermerkt, dass entlang der Zellachse zwischen dem ersten und/oder dem zweiten Zellrahmen und der Anionen-Austauschermembran eine zusätzliche Flachdichtung angeordnet sein kann.

Weiters umfasst die Elektrolysezelle zumindest einen ersten Strömungskanal und zumindest einen zweiten Strömungskanal, welche Strömungskanäle jeweils durch fluidisch kommunizierende Durchbrüche im ersten und zweiten Zellrahmen und in der Anionen-Austauschermembran gebildet sind und deren Hauptrichtung parallel oder im Wesentlichen parallel zur Zellachse verläuft. Der zumindest eine erste Strömungskanal und der zumindest eine zweite Strömungskanal sind dabei in radialer Richtung zur Zellachse beabstandet und in Bezug auf die Zellachse einander gegenüberliegend positioniert.

Der zumindest eine erste Zellrahmen und der zumindest eine zweite Zellrahmen weisen jeweils zumindest eine Ausström-Kanalstruktur auf, welche mit dem ersten Strömungskanal und mit dem Innenbereich des jeweiligen Zellrahmens fluidisch verbunden ist. Weiters weist der zumindest eine erste Zellrahmen und der zumindest eine zweite Zellrahmen jeweils zumindest eine Einström-Kanalstruktur auf, welche mit dem zweiten Strömungskanal und mit dem Innenbereich des jeweiligen Zellrahmens fluidisch verbunden ist.

Die Einström-Kanalstruktur und/oder die Ausström-Kanalstruktur weisen zumindest zwei in einem Winkel zueinander verlaufende Teilkanäle auf, welche Teilkanäle unmittelbar in den zumindest einen ersten Strömungskanal münden und/oder unmittelbar aus dem zumindest einen zweiten Strömungskanal austreten. Jeder der Teilkanäle ist mit dem Innenbereich des jeweiligen Zellrahmens fluidisch verbunden.

Mit der Anordnung der Einström-Kanalstruktur und der Ausström-Kanalstruktur in Verbindung mit den Teilkanälen wird somit eine günstige Strömungsverteilung im Innenbereich der Elektrolysezelle aufgebaut, bei welcher das Entstehen von Bereichen mit geringer Strömungsgeschwindigkeit bezüglich der mittleren Strömungsgeschwindigkeit im Innenbereich vermieden wird. Daraus resultiert eine besonders vorteilhafte Durchströmung, insbesondere eine möglichst effiziente Durchspülung, des vom Zellrahmen umgrenzten Innenbereiches, und in weiterer Folge eine hochgradige Abförderung der in den Innenbereichen der Zellrahmen gebildeten Produktgase bzw. Gasblasen. Durch die dargelegte Anordnung der Anionen-Austauschermembran, des zumindest einen ersten Zellrahmens und des zumindest einen zweiten Zellrahmens wird auf jeder Seite der Anionen-Austauschermembran ein vom jeweiligen Zellrahmen umgrenzter Innenbereich ausgebildet. Der jeweilige Innenbereich auf jeder Seite der Anionen-Austauschermembran bildet somit eine Halbzelle der Elektrolysezelle aus, welche Halbzellen zur Durchführung der Elektrolyse bereitgestellt sind.

Beim Prozess der Elektrolyse entstehen Produktgase innerhalb der jeweiligen Halbzelle an der Anionen-Austauschermembran. Durch die offenbarte vorteilhafte Ausgestaltung der Elektrolysezelle und die somit resultierenden vorteilhaften Strömungszustände innerhalb der jeweiligen Halbzelle wird die Gasblasenablösung von der Anionen-Austauschermembran in den Randbereichen der jeweiligen Halbzelle begünstigt. Dadurch wird neben einer erhöhten Lebensdauer der Anionen-Austauschermembran auch die Effektivität derselben verbessert. Ein weiterer vorteilhafter Effekt ist eine aufgrund der speziellen Ausgestaltungsform der Ausström-Kanalstruktur und der Einström-Kanalstruktur resultierende Gleichverteilung von Fluid bzw. Elektrolyt innerhalb der Halbzellen und eine damit einhergehende verbesserte Kühlung oder gegebenenfalls auch ein verbessertes Aufwärmen der Anionen-Austauschermembran je nach Betriebszustand der Elektrolysezelle.

Gemäß einer vorteilhaften Weiterbildung ist es möglich, dass der erste und/oder zweite Zellrahmen eine innere Begrenzungskante aufweist, welche einen Begrenzungsabschnitt des Innenbereichs definiert, und welche innere Begrenzungskante in Bezug auf eine vertikal verlaufende Rahmenebene des ersten und/oder zweiten Zellrahmens im oberen Bereich und/oder im unteren Bereich einen oberen und/oder einen unteren geradlinigen Teilabschnitt aufweist. Dabei verläuft im unteren geradlinigen Teilabschnitt zumindest ein Teilkanal der Einström-Kanalstruktur parallel oder fluchtend zum unteren geradlinigen Teilabschnitt und weiters verläuft im oberen geradlinigen Teilabschnitt zumindest ein Teilkanal der Ausström-Kanalstruktur parallel oder fluchtend zum oberen geradlinigen Teilabschnitt.

Zweckmäßig kann sein, wenn die Teilkanäle der Ausström-Kanalstruktur und/oder die Teilkanäle der Einström-Kanalstruktur geradlinig verlaufen.

Vorteilhaft bei dieser Weiterbildung ist vor allem, dass das in den Innenbereich der Elektrolysezelle einströmende und aus dem Innenbereich der Elektrolysezelle ausströmende Betriebsmedium, bzw. der Elektrolyt oder ein Zweiphasengemisch aus Elektrolyt und gelösten Gasen, in die Bereiche der Randzonen des Innenbereichs geführt wird. Dadurch entsteht eine ideale Ausnutzung der beim Prozess der Elektrolyse aktiven Fläche der Anionen-Austauschermembran. Es resultiert weiters eine homogenisierte Verteilung des Betriebsmediums in jedem Innenbereich eines Zellrahmens, bzw. in jeder Halbzelle der Elektrolysezelle, was weiters einen hohen Wirkungsgrad der Elektrolysezelle bewirkt. Auch ist durch diese vorteilhafte Ausprägung der konvektive Wärmeübergang zwischen dem Betriebsmedium und dem jeweiligen Zellrahmen und in weiterer Folge zwischen der aktiven Fläche der Anionen-Austauschermembran und dem jeweiligen Zellrahmen verbessert. Dieser vorteilhafte Effekt bewirkt eine erhöhte Betriebssicherheit der Elektrolysezelle und zudem einen lebensdauerschonenden Betrieb. Des Weiteren sind dadurch die Anforderungen an die Materialeigenschaften und an die Materialstärken, bzw. die Dickenerstreckung entlang der Zellachse der Anionen-Austauschermembran verringert, was einen besonderen wirtschaftlichen Vorteil hinsichtlich der Fertigung der Elektrolysezelle mit sich bringt.

Vorteilhaft ist auch eine Ausprägung, gemäß welcher vorgesehen sein kann, dass zumindest ein Teilkanal der Ausström-Kanalstruktur mit dem Innenbereich des ersten und/oder zweiten Zellrahmens in Bezug auf die vertikal verlaufende Rahmenebene an einem obersten Teilabschnitt der inneren Begrenzungskante mit dem Innenbereich fluidisch gekoppelt ist
Durch diese Maßnahme wird ein besonders vorteilhafter Strömungszustand innerhalb der jeweiligen Halbzelle der Elektrolysezelleerreicht, da zum einen im oberen Bereich der jeweiligen Halbzelle bezogen auf die Vertikalebene kein Dom beziehungsweise keine Kuppel ausgebildet wird, in welcher Kuppel sich im Betrieb der Elektrolysezelle eine Gasblasenansammlung bilden würde. Eine derartige Gasblasenansammlung führt unter anderem zu lokal hohen Widerständen an der Anionen-Austauschermembran und somit zu einer möglicherweise unzulässigen thermischen Belastung dergleichen. Zum anderen wird durch diese Maßnahme gleichermaßen verhindert, dass sich im unteren Bereich der jeweiligen Halbzelle in Bezug auf die Vertikalebene eine Senke ausbildet. Eine derartige Senke würde zu einem Bereich mit geringen Strömungsgeschwindigkeiten, bzw. zu einem strömungstechnischen Totraum und somit zu einem unterbundenen Austausch von Betriebsmedium führen. Ein derartig unterbundener Austausch würde zu einer thermisch unzulässigen Zone an der Anionen-Austauschermembran führen. In jedem Fall ist durch diese vorteilhafte Ausgestaltungsform der Elektrolysezelle zum einen der Wirkungsgrad des Prozesses der Elektrolyse innerhalb der Elektrolysezelle erhöht. Zum anderen wird die Lebensdauer der Anionen-Austauschermembran erhöht und gleichermaßen die Sicherheit erhöht, da eine ideale Durchströmung der jeweiligen Halbzelle der Elektrolysezelle gewährleistet ist.

Ferner kann vorgesehen sein, dass der zumindest eine erste Zellrahmen und der zumindest eine zweite Zellrahmen baulich und geometrisch identisch ausgebildet sind und in Bezug auf eine in der vertikal verlaufenden Rahmenebene verlaufende Vertikalachse um 180° gewendet angeordnet sind.

Durch diese vorteilhafte Weiterbildung ergibt sich vor allem der wirtschaftliche Vorteil des Gleichteilprinzips. Neben den produktionstechnischen Vorteilen ergeben sich in weiterer Folge auch Vorteile durch die verringerte Komplexität im Zusammenbau einer Elektrolysezelle. Somit ist die Wahrscheinlichkeit einer fehlerhaften Anordnung der einzelnen plattenförmigen Elemente entlang der Zellachse verringert. Des Weiteren sind die strömungsleitenden Maßnahmen der Elektrolysezelle zur Versorgung der Halbzellen mit Betriebsmedium vollständig in die jeweiligen Zellrahmen integriert. Da die Dickenerstreckungen der Zellrahmen den Hauptanteil der Längenerstreckung einer Elektrolysevorrichtung aus mehreren gestapelten Elektrolysezellen entlang der Zellachse ausmachen, ergeben sich dadurch weiterführende wirtschaftliche Vorteile, insbesondere in Bezug auf die summierten Herstellungskosten einer derartigen Elektrolysevorrichtung.

Des Weiteren kann es zweckmäßig sein, wenn der zumindest eine erste Zellrahmen und der zumindest eine zweite Zellrahmen jeweils eine Ausström-Kanalstruktur und jeweils eine Einström-Kanalstruktur aufweisen und dass die jeweils eine Ausström-Kanalstruktur und die jeweils eine Einström-Kanalstruktur des jeweiligen Zellrahmens durch jeweilige nutartige Vertiefungen oder Einprägungen in nur einer der beiden Flachseiten des jeweiligen Zellrahmens gebildet sind.

Vorteilhaft ist dabei, dass eine Flachseite eines Zellrahmens keine nutartigen Vertiefungen oder Einprägungen für eine Kanalstruktur aufweist und somit ein an diese Flachseite entlang der Zellachse anschließendes plattenförmiges Element, wie beispielsweise eine Flachdichtung, eine erhöhte Lebensdauer aufweist. Dies resultiert aus dem Umstand, dass jede Einprägung oder jeder Durchbruch in einem Zellrahmen durch eine druckdichte Anordnung mit dem jeweiligen benachbarten plattenförmigen Element eine Kerbwirkung auf das benachbarte plattenförmige Element bewirkt. Vor allem bei einer Betriebsweise der Elektrolysezelle mit schwellenden Temperatur- und/oder Druckbelastungen kommt es bei den plattenförmigen Elementen zu relativen Gleitversätzen bzw. Gleitbewegungen zueinander, wodurch eine vorliegende Kerbwirkung eine verstärkte Belastung auf das jeweilige plattenförmige Element bewirkt. Mit der angegebenen Erweiterung der Elektrolysezelle wird nun eine derartige Belastung durch die Verringerung bzw. die Vermeidung von nutartigen Vertiefungen oder Einprägungen auf einer Flachseite eines Zellrahmens verringert. In weiterer Folge resultieren somit neben einer erhöhten Sicherheit der gesamten Elektrolysezelle auch wirtschaftliche Vorteile hinsichtlich der verwendeten Materialien für an die jeweiligen Zellrahmen anschließende Materialien und somit hinsichtlich der Zeitabstände zwischen Wartungszyklen.

Darüber hinaus kann vorgesehen sein, dass der zumindest eine erste Zellrahmen und der zumindest eine zweite Zellrahmen gegenüber der Anionen-Austauschermembran derart angeordnet sind, dass die jeweilige Flachseite der Zellrahmen ohne nutartige Vertiefungen oder Einprägungen der Anionen-Austauschermembran nächstliegend zugeordnet ist.

Bei dieser möglichen Ausgestaltung ist vor allem vorteilhaft, dass die kontaktierte Klemmfläche beziehungsweise die Kontaktfläche zwischen den Zellrahmen und einem der Flachseite des jeweiligen Zellrahmens nächstliegenden plattenförmigen Elements, insbesondere einer Anionen-Austauschermembran oder einer Flachdichtung, maximiert ist. Somit ist die Abdichtung zwischen dem zumindest einem Zellrahmen und dem nächstliegenden plattenförmigen Element entlang der Zellachse besonders zuverlässig und weiters ist die Stabilität der Elektrolysezelle durch die homogenisierte und flächenmäßig maximierte Kontaktierung der plattenförmigen Elemente zueinander erhöht. In weiterer Folge ist es somit möglich, dass aufgrund der minimierten Kerbwirkung durch das Fehlen von nutartigen Vertiefungen oder Einprägungen auf einer Flachseite des jeweiligen Zellrahmens ein in Richtung der Zellachse nächstliegendes plattenförmiges Element mit geringerer Dickenerstreckung entlang der Zellachse anzuordnen, als im Vergleich mit einer Ausführungsform mit nutartigen Vertiefungen oder Einprägungen auf der kontaktierenden Flachseite. Somit wird die Effizienz der Elektrolysezelle erhöht, da der ohmsche Widerstand durch die geringeren Bauteildicken, bzw. die Dickenerstreckung entlang der Zellachse der plattenförmigen Elemente reduziert ist und Verluste verringert sind.

Ferner kann es zweckmäßig sein, dass die Anionen-Austauschermembran mit der nächstliegend zugeordneten Flachseite des zumindest einen ersten Zellrahmens und/oder des zumindest einen zweiten Zellrahmens durch Verkleben, Verschweißen und/oder Verpressen flüssigkeits- und gasdicht verbunden ist. Im Wesentlichen ist somit die Verbindung zumindest eines Zellrahmens mit der Anionen-Austauschermembran technisch dicht.

Neben dem Effekt einer gasdichten Verbindung der plattenförmigen Elemente ist dabei vorteilhaft, dass zum einen die Komplexität beim Zusammenbau der Elektrolysezelle reduziert wird, und somit mögliche Fehlerquellen durch einen inkorrekten Zusammenbau verringert sind. Zum anderen entfällt durch diese Ausgestaltung jeweils eine abzudichtende Füge- bzw. Dichtebene oder eine zusätzliche Flachdichtung zwischen jeweils einem Zellrahmen und der Anionen-Austauschermembran, was insgesamt die Abdichtung der Elektrolysezelle verbessert. Weiters ist eine dadurch entstehende verbesserte Stabilisierung der Anionen-Austauschermembran ein vorteilhafter Effekt, der in weiterer Folge die Lebensdauer der Elektrolysezelle erhöht. Auch sind mögliche Fehlerquellen bei der Montage einer Elektrolysevorrichtung zusammengesetzt aus mehreren entlang der Zellachse gestapelten Elektrolysezellen reduziert, da bereits eine Baugruppe aus Zellrahmen und Anionen-Austauschermembran gebildet wurde. Damit ist die Montage von entlang der Zellachse angeordneten Elektrolysezellen vereinfacht, da die Anzahl an einzelnen Bauteilen beim Montageprozess reduziert ist.

Vorteilhaft ist auch eine Ausprägung, gemäß welcher vorgesehen sein kann, dass die innere Begrenzungskante des ersten und/oder zweiten Zellrahmens abschnittsweise eine Kreisbogenform oder einer Ellipsenform aufweist und bei einer Ellipsenform deren Ellipsen-Hauptachse oder deren Ellipsen-Nebenachse parallel oder im Wesentlichen parallel zur Vertikalachse orientiert ist.

Somit entsteht eine gerichtete Umspülung der Randbereiche des Innenbereiches der Zellrahmen, respektive der Halbzellen der Elektrolysezelle. In Kombination mit der offenbarten Positionierung der Einström-Kanalstruktur und der Ausström-Kanalstruktur am jeweiligen Zellrahmen wird somit ein S-förmiger Strömungsverlauf bzw. eine Strömungsverwirbelung im Innenbereich der jeweiligen Zellrahmen bzw. in den Halbzellen der Elektrolysezelle induziert. Somit ist der Strömungsverlauf der Strömung innerhalb der jeweiligen Halbzelle derart gestaltet, dass die Gasblasenablösung von der Anionen-Austauschermembran begünstigt ist. Wiederum wirkt sich dies positiv auf die Lebensdauer der Anionen-Austauschermembran und auf die Lebensdauer und Effektivität derselben aus. Gleichzeitig wird durch die resultierende rundliche bzw. abgerundete Grundform des Innenbereichs einer möglichen Ausbildung von Strömungsbereichen mit geringen Strömungsgeschwindigkeiten entgegengewirkt.

Erfindungsgemäss ist der Querschnitt des zumindest einen ersten Strömungskanals und/oder des zumindest einen zweiten Strömungskanals der Elektrolysezelle entlang der Zellachse zunehmend verjüngend oder zunehmend vergrößernd ausgeführt.

Durch diese Ausgestaltung entsteht der vorteilhafte Effekt einer, je nach Anforderung beschleunigten oder verzögerten Strömung in den Strömungskanälen der Elektrolysezelle bzw. in den Strömungskanälen von mehreren entlang der Zellachse angeordneten Elektrolysezellen. Je nach Situation der Versorgung einer Elektrolysezelle mit einem Betriebsmedium mittels der Strömungskanäle und je nach angestrebtem optimalem Betriebsmodus der Elektrolysezelle wird mit dieser Maßnahme der Strömungszustand der Strömung aus der Einström-Kanalstruktur in den Innenbereich des jeweiligen Zellrahmens, also in die jeweilige Halbzelle, positiv beeinflusst. Weiters hat diese Maßnahme im Bereich des ersten Strömungskanals eine vorteilhafte Rückwirkung auf den Strömungszustand des Betriebsmedium, insbesondere einer Zweiphasenströmung bestehend aus Betriebmedium und gelösten Gasen in der Ausström-Kanalstruktur. Ein technischer Vorteil ist hierbei wiederum eine effektive Abfuhr der Gasblasen von der Anionen-Austauschermembran.

Darüber hinaus kann vorgesehen sein, dass der zumindest eine erste Strömungskanal in eine erste Strömungskanal-Richtung entlang der Zellachse zunehmend vergrößernd ausgeführt ist und dass der zumindest eine zweite Strömungskanal in eine, zur ersten Strömungskanal-Richtung entgegengesetzte, zweite Strömungskanal-Richtung zunehmend verjüngend ausgeführt ist.

Diese Maßnahme wirkt sich besonders vorteilhaft auf den Strömungszustand im Innenbereich eines jeweiligen Zellrahmens aus, wenn mehrere Elektrolysezellen entlang der Zellenachse mit beispielsweise zumindest einer Bipolarplatte und etwaigen Flachdichtungen beabstandet aneinandergereiht bzw. gestapelt werden. Da der Volumenstrom eines Betriebsmediums, welches dem Innenbereich des Zellrahmens bzw. jeweils einer Halbzelle über den zumindest einen zweiten Strömungskanal zugeführt wird, in dem zumindest einem Strömungskanal über dessen Längenerstreckung entlang der zweiten Strömungskanal-Richtung abnimmt, wird durch die zunehmende Verjüngung entlang der zweiten Strömungskanal-Richtung die Strömungsgeschwindigkeit des Mediums in einem definierten Bereich gehalten und somit eine ideale Versorgung der jeweiligen Innenbereiche der aneinandergereihten bzw. entlang der Zellachse gestapelten Elektrolysezellen gewährleistet.

In gleicher Weise wird durch den sich entlang der ersten Strömungskanal-Richtung vergrößernd ausgeführten zumindest einen ersten Strömungskanal die stetige Abfuhr des Mediums aus dem jeweiligen Innenbereich der aneinandergereihten Elektrolysezellen gewährleistet. Zusätzlich zu diesem Effekt wirkt sich der sich entlang der ersten Strömungskanal-Richtung vergrößernd ausgeführte zumindest eine erste Strömungskanal positiv auf den Gasblasentransport innerhalb des aus dem Innenbereich der jeweiligen Halbzellen der Elektrolysezellen abzuführenden Zweiphasengemisches aus. Die angegebene Ausführungsform wirkt sich somit in direkter Weise auf einen erhöhten Gesamtwirkungsgrad von Elektrolysezellen aus. Gleichzeitig ist durch die stetige Aufrechterhaltung der Versorgung jeder Elektrolysezelle wiederum die Lebensdauer und Sicherheit dergleichen verbessert, da der bestimmungsgemäß zugeführte und abgeführte Volumenstrom an Betriebsmedium für eine hinreichende Kühlung oder gegebenenfalls für eine vorgesehene Aufwärmung und für eine intensive Gasblasenablösung von der Anionen-Austauschermembran in der jeweiligen Elektrolysezelle sorgt.

Insbesondere kann es vorteilhaft sein, wenn der Strömungsquerschnitt zumindest eines Teilkanals der Ausström-Kanalstruktur und/oder der Einström-Kanalstruktur ausgehend vom jeweiligen Strömungskanal in Richtung zum Innenbereich eine Aufweitung aufweist, welche Aufweitung insbesondere trompetenförmig verlaufend ausgeführt sind.

Besonders vorteilhaft ist diese Weiterbildung, da beim Einströmen aus dem Innenbereich in den jeweiligen Teilkanal der Ausström-Kanalstruktur eine beschleunigte Strömung induziert wird, wodurch das Mitführen von gelösten Gasblasen eines Produktgases im Zweiphasengemisch aus Fluid bzw. Betriebsmedium und Produktgas aus der jeweiligen Halbzelle, respektive aus dem Innenbereich des jeweiligen Zellrahmens der Elektrolysezelle begünstigt wird.

Ferner kann es zweckmäßig sein, dass die zumindest zwei Teilkanäle der Ausström-Kanalstruktur und/oder die zumindest zwei Teilkanäle der Einström-Kanalstruktur in einem Winkel im Bereich zwischen 27,5° und 135°, insbesondere in einem Winkel von 90°, zueinander verlaufen und dass zwischen den zumindest zwei Teilkanälen der Ausström-Kanalstruktur zumindest ein dritter Teilkanal angeordnet ist und/oder zwischen den zumindest zwei Teilkanälen der Einström-Kanalstruktur zumindest ein dritter Teilkanal angeordnet ist.

Damit ist es in weiterer Folge möglich, dass die Zellrahmen hinsichtlich ihrer Dickenerstreckung entlang der Zellachse, sprich in Bezug auf die Dicke eines Zellrahmens, geringer als bei einer Ausführungsform mit jeweils zwei Teilkanälen je Einström- und/oder Ausström-Kanalstruktur ausgeführt sind, da weiterhin der summierte Kanalquerschnitt der jeweiligen Teilkanäle der dargelegten Weiterbildung weitestgehend gleich oder größenmäßig ähnlich einer Ausführung mit zwei Teilkanälen je Einström- oder Ausström-Kanalstruktur realisiert wird. In weiterer Folge resultiert aus der geringeren Dicke der Zellrahmen neben einer verringerten axialen Erstreckung der Elektrolysezelle der bedeutende Vorteil einer geringeren Wärmeausdehnung der Zellrahmen bei thermischer Belastung und somit eine verbesserte Abdichtung und erhöhte Sicherheit der Elektrolysezelle. Zusätzlich wird mit der beschriebenen vorteilhaften Erweiterung die Leistungsdichte pro Längeneinheit entlang der Zellachse einer Elektrolysevorrichtung bestehend aus mehreren Elektrolysezellen erhöht.

Gemäß einer Weiterbildung ist es möglich, dass entlang der inneren Begrenzungskante des zumindest einen ersten Zellrahmens und/oder des zumindest einen zweiten Zellrahmens wenigstens eine die Ausström-Kanalstruktur und/oder die Einström-Kanalstruktur einschließende und umlaufend geschlossene Erhebung gegenüber der Grundfläche des jeweiligen Zellrahmens ausgebildet ist, welche wenigstens eine Erhebung als Dichtungselement vorgesehen ist. Insbesondere ist es vorteilhaft, wenn die wenigsten eine Erhebung bzw. das Dichtungselement einteilig verbunden mit dem jeweiligen Zellrahmen ist, also als integraler Bestandteil des jeweiligen Zellrahmens ausgeführt ist.

Da das Dichtungselement somit möglichst nahe an dem Innenbereich des jeweiligen Zellrahmens und die Einström- und Ausström-Kanalstruktur einschließend positioniert ist, ergibt sich der Vorteil einer besonders wirkungsvollen Abdichtung im Bereich zwischen einem Zellrahmen und einem an die Flachseite des Zellrahmens anschließendem weiteren plattenförmigen Elements, wie beispielsweise einer Flachdichtung oder einer Bipolarplatte. Damit ist die Diffusion von Produktgasen aus dem Innenbereich eines Zellrahmens bzw. aus eine jeweiligen Halbzelle wirkungsvoll unterbindbar.

Ferner kann es vorteilhaft sein, wenn die wenigstens eine umlaufend geschlossene Erhebung zumindest auf einer Flachseite des zumindest einen ersten Zellrahmens und/oder des zumindest einen zweiten Zellrahmens ausgebildet ist und eine Höhe von im Wesentlichen 1% bis 20%, vorzugsweise etwa 10% der Dickenerstreckung in Richtung der Zellachse einer an jeweils dieser zumindest einen Flachseite entlang der Zellachse nächstliegend angeordneten plattenförmigen Flachdichtung aufweist.

Vorteilhaft ist dabei, dass eine entlang der Zellachse nächstliegende Flachdichtung gezielt plastisch verformt wird, um die Dichtwirkung zwischen dem Zellrahmen und diesem plattenförmigen Element zu erhöhen bzw. besonders wirkungsvoll zu gewährleisten. Weiters wird ein betriebsbedingtes Gleiten von beispielsweise einer Flachdichtung relativ zum anliegenden Zellrahmen durch die umlaufend geschlossene Erhebung effektiv hintangehalten bzw. stark verringert.

Insbesondere kann es vorteilhaft sein, wenn der zumindest eine erste Zellrahmen und/oder der zumindest eine zweite Zellrahmen auf nur einer Flachseite oder auf beiden einander gegenüberliegenden Flachseiten vereinzelte und/oder zusammenhängende Oberflächenabschnitte mit höherer Oberflächenrauigkeit als die restliche Oberfläche aufweist.

Dabei ergibt sich der vorteilhafte Effekt, dass an diesen Oberflächenbereichen ein betriebsbedingtes, beispielsweise durch thermische Belastung induziertes Gleiten des nächstliegenden plattenförmigen Elements verringert bzw. gegenüber einer Ausführung ohne Zonen mit erhöhter Oberflächenrauigkeit verringert oder hintangehalten wird. Weiters werden bei der Anordnung zueinander bzw. der Montage der Zellrahmen und der Anionen-Austauschermembran entlang der Zellachse ein Verrutschen der Einzelteile verringert und somit Fehlerquellen vermieden.

Gemäß einer Weiterbildung ist es möglich, dass die Teilkanal-Zwischenbereiche zwischen den Teilkanälen eine höhere Oberflächenrauigkeit aufweisen als die restliche Oberfläche des zumindest einen ersten Zellrahmens und/oder des zumindest einen zweiten Zellrahmens auf der Flachseite mit den nutartigen Vertiefungen aufweiset.

Durch diese vorteilhafte Ausgestaltung wird, wie beschrieben, ein gegenseitiges Gleiten von einem dem Zellrahmen entlang der Zellachse nächstliegendem plattenförmigem Element, insbesondere einer Flachdichtung, und dem Zellrahmen hintangehalten. Somit wird in weiterer Folge verhindert, dass eine Verkleinerung der Querschnittsfläche der Teilkanäle auftritt, welche Verkleinerung auf Grund von Gleiten der Flachdichtung auftreten würde.

Darüber hinaus kann vorgesehen sein, dass der zumindest eine erste Strömungskanal und/oder der zumindest eine zweite Strömungskanal durch fluidisch kommunizierende ellipsenförmige Durchbrüche zumindest im ersten und zweiten Zellrahmen und in der Anionen-Austauschermembran gebildet sind.

Dabei entsteht der positive Effekt, dass bei entsprechender Ausrichtung die ellipsenförmigen Strömungskanäle eine verringerte oder vergrößerte Innenfläche jeweiligen des Strömungskanals im Nahbereich der Außen- und Innenfläche der Elektrolysezelle aufweisen, wobei gleichzeitig durch die entsprechende Bemessung des elliptischen Strömungskanal-Querschnitts ein gleicher Strömungsdurchsatz gewährleistet ist. Somit kann eine verbesserte Abdichtung der ellipsenförmigen Strömungskanäle entlang der Zellachse der Elektrolysezelle gegenüber dem Innenbereich bzw. gegenüber dem Bereich außerhalb der Elektrolysezelle gewährleistet werden.

Zweckmäßig kann sein, wenn der zumindest eine erste Zellrahmen und/oder der zumindest eine zweite Zellrahmen aus Kunststoff hergestellt ist. Insbesondere kann es zweckmäßig sein, wenn der jeweilige Zellrahmen im Spritzgussverfahren hergestellt ist. Es kann vorgesehen sein, dass die Durchbrüche zur Ausbildung der Strömungskanäle bereits im Spritzgussteil, also im jeweiligen mittels Spritzgussverfahren hergestellten Zellrahmen vorgesehen sind.

Dabei ist von Vorteil, dass die Stückkosten für Zellrahmen durch das ermöglichte Gleichteilprinzip in Kombination mit dem Spritzgussverfahren als Herstellungsverfahren gegenüber anderen Herstellungsverfahren, wie beispielsweise eine maschinelle Bearbeitung von Rohlingen mit der Grundform eines Zellrahmens, geringer sind.

Weiters ist ein Verfahren zur Herstellung zumindest eines entlang der Zellachse verlaufenden Strömungskanals durch zumindest zwei, entlang der Zellachse angeordneten Elektrolysezellen gemäß einem der vorhergehenden Ansprüche vorgesehen. Bei gegenständlichem Verfahren werden zumindest die Elektrolysezellen entlang der Zellachse aneinandergereiht angeordnet und entlang der Zellachse zueinander gehalten. Weiters wird mittels einer Bohrvorrichtung der zumindest eine Strömungskanal entlang der Zellachse sich verjüngend oder sich vergrößernd ausgebildet.

Vorteilhaft ist dabei, dass der zumindest eine Strömungskanal derart ausgestaltet wird, dass die bereits geschilderten vorteilhaften Effekte erreicht werden. Beim Anordnen bzw. beim Stapeln der einzelnen Elemente der Elektrolysezellen können rotatorische Versätze der einzelnen Elemente zueinander um die Zellachse auftreten. Diese rotatorischen Versätze würden in Verkleinerungen der Strömungskanäle durch die Elektrolysevorrichtung bzw. die zumindest zwei Elektrolysezellen entlang der Zellachse resultieren. Durch die Herstellung des zumindest einen Strömungskanals in zusammengebautem bzw. zusammengefügten Zustand der zumindest zwei Elektrolysezellen werden diese Verkleinerungen des zumindest einen Strömungskanals verringert bzw. gänzlich vermieden, wodurch ein effektiver Betrieb entsprechend der Auslegung der Versorgung der Halbzellen der Elektrolysezellen ermöglicht ist. Weiters ist die Kanalstruktur der Strömungskanäle durch die Elektrolysezellen durch dieses Verfahren individualisiert in Bezug auf die Anordnung der einzelnen Elektrolysezellen entlang der Zellachse herstellbar. So kann beispielsweise vorgesehen sein, dass entsprechend der notwendigen Versorgungssituation einer Elektrolysezelle entsprechend deren Positionierung entlang der Zellachse innerhalb einer Elektrolysevorrichtung unterschiedliche Kanalstrukturen und/oder Kanalquerschnitte der Strömungskanäle mittels des dargelegten Verfahrens realisiert werden.

Zum besseren Verständnis der Erfindung wird diese anhand der nachfolgenden Figuren näher erläutert.

Es zeigen jeweils in vereinfachter, schematischer und beispielhafter Darstellung:
- Fig. 1: eine Explosionszeichnung einer möglichen Ausgestaltungsform einer Elektrolysevorrichtung;
- Fig. 2: die Elektrolysevorrichtung nach Fig. 1 in perspektivischer Darstellung;
- Fig. 3: eine Darstellung von zwei entlang der Zellachse angeordneten Elektrolysezellen;
- Fig. 4: eine mögliche Ausgestaltungsform eines Zellrahmens in vereinfachter und schematischer Darstellung;
- Fig. 5: eine mögliche Ausgestaltungsform des Zellrahmens in perspektivischer Darstellung;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Weiters sei festgehalten, dass entsprechend der Bezugszeichenliste Begriffe aus der Bezugszeichenliste mit und/oder ohne bestimmten Index in der Beschreibung der Offenbarung verwendet werden. Sofern eine genaue Differenzierung der Begriffe hinsichtlich deren spezifischer Ausgestaltungsform nicht notwendig ist, werden keine Indizes verwendet. Im Umkehrschluss wird beispielsweise ein Teilkanal 12a von einem Teilkanal 12b entsprechend der jeweiligen Beschreibung differenziert, wobei beides weiterhin Teilkanäle 12 sind.

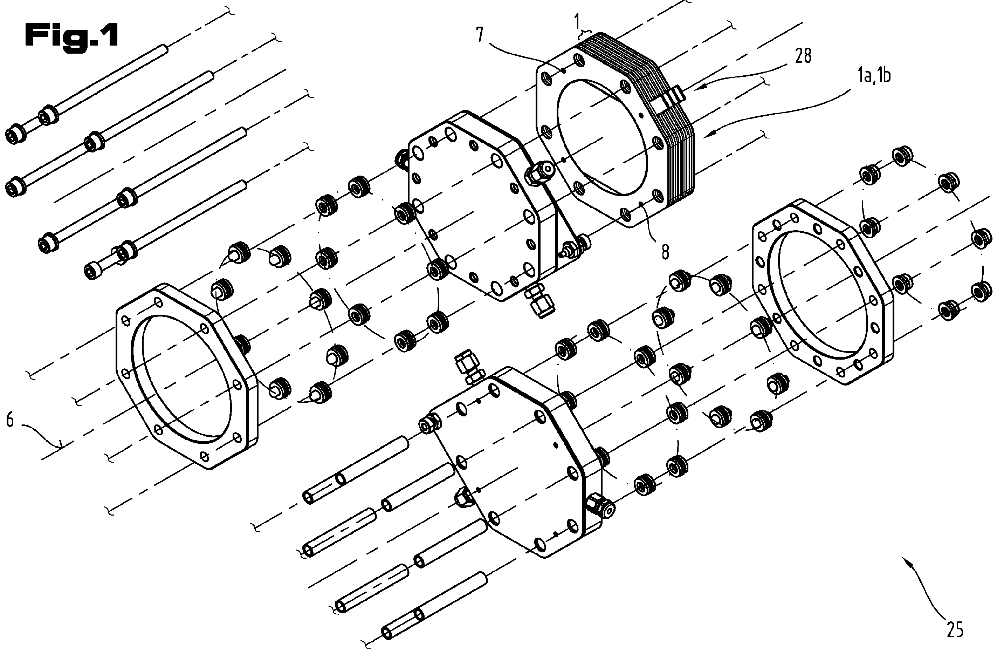

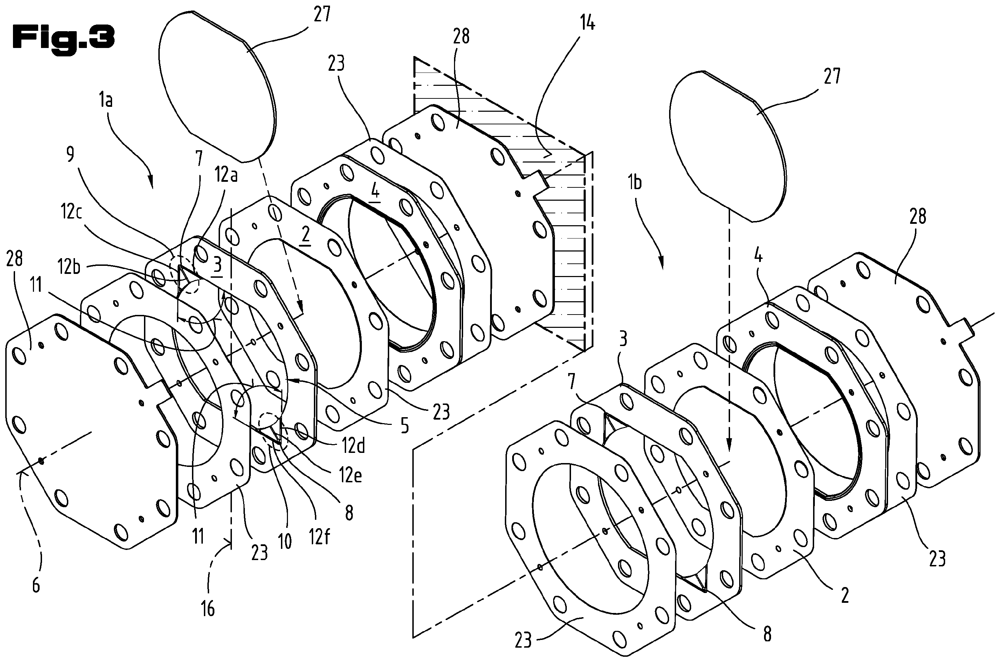

In der Fig. 1 ist eine Explosionszeichnung einer Ausführungsform einer Elektrolysevorrichtung 25 gezeigt. Die Elektrolysevorrichtung 25 weist wenigstens zwei entlang der Zellachse 6 gestapelt angeordnete bzw. seriell aneinandergereiht angeordnete Elektrolysezellen 1a, 1b gemäß Fig. 3 auf. Eine Elektrolysezelle 1 kann jeweils entlang der Zellachse 6 angeordnet zumindest einen ersten Zellrahmen 3 und zumindest einen zweiten Zellrahmen 4, sowie eine Anionen-Austauschermembran 2 umfassen. Weiters können zwischen zwei Elektrolysezellen 1 zumindest eine Flachdichtung 23 und/oder zumindest eine Bipolarplatte entlang der Zellachse 6 angeordnet sein. Weiters weisen die entlang der Zellachse 6 angeordneten Elektrolysezellen 1a, 1b Strömungskanäle auf, welche durch Durchbrüche in den genannten, flächigen bzw. plattenartigen Elementen gebildet sind. Insbesondere weisen die Elektrolysezellen 1a, 1b zumindest einen ersten Strömungskanal 7 und zumindest einen zweiten Strömungskanal 8 auf. Die Strömungskanäle 7, 8 verlaufen dabei im Wesentlichen parallel zur Zellachse 6.

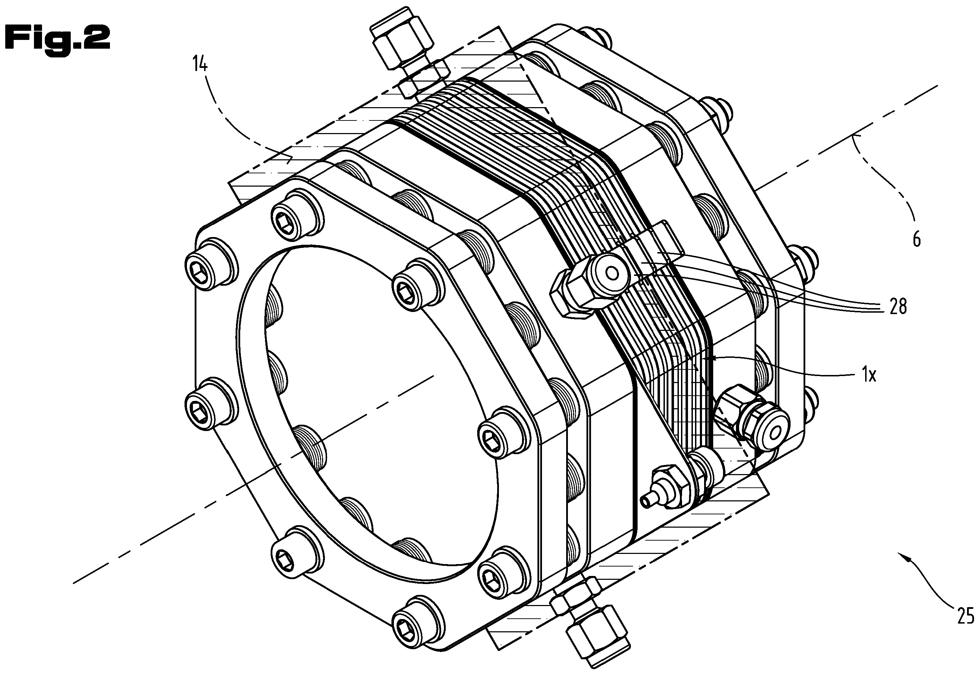

Fig.2 zeigt die Elektrolysevorrichtung 25 nach Fig. 1 in zusammengebautem Zustand. Weiters ist die im Einsatzzustand der Elektrolysevorrichtung 25 vertikal verlaufende Rahmenebene 14 der einzelnen Zellrahmen 4, 5 dargestellt. Der erste Zellrahmen 3 kann auf einer ersten Flachseite der Anionen-Austauschermembran 2 mittelbar oder unmittelbar flüssigkeits- und gasabdichtend anliegen kann und der zweite Zellrahmen 4 kann auf einer gegenüberliegenden zweiten Flachseite der Anionen-Austauschermembran 2 mittelbar oder unmittelbar flüssigkeits-und gasabdichtend anliegen. Die Elektrolysevorrichtung 25 kann wie dargestellt eine Mehrzahl von Elektrolysezellen 1x umfassen.

In der Fig. 3 sind zwei entlang der Zellachse 6 positionierte Elektrolysezellen 1 in stark vereinfachter und schematischer Darstellung gezeigt, wobei für gleiche Teile gleiche Bezugszeichen bzw. Bauteilbezeichnungen verwendet werden wie in den vorangegangenen Fig. 1 und Fig. 2. Die Fig. 3 zeigt in vereinfachter schematischer Form eine erste Elektrolysezelle 1a und eine zweite Elektrolysezelle 1b, welche Elektrolysezellen 1 entlang der Zellachse 6 angeordnet sind. Weiters zeigt die Fig. 3 Flachdichtungen 23, welche jeweils entlang der Zellachse 6 vor und nach der Elektrolysezelle 1a und der Elektrolysezelle 1b angeordnet sind. Zum besseren Verständnis des Aufbaus entlang der Zellachse 6 zeigt die Fig. 2 eine Elektrolysevorrichtung 25 in zusammengebautem Zustand mit mehreren Elektrolysezellen 1x. Wie in Fig. 3 dargestellt, umfasst eine Elektrolysezelle 1 entlang der Zellachse 6 gestapelt zumindest einen ersten Zellrahmen 3, eine Anionen-Austauschermembran 2 und zumindest einen zweiten Zellrahmen 4. Entsprechend der Darstellung sind der erste Zellrahmen 3 und der zweite Zellrahmen 4 entlang der Zellachse 6 zueinander beabstandet angeordnet, wobei der erste Zellrahmen 3 auf einer ersten Flachseite der Anionen-Austauschermembran 2 angeordnet ist und der zweite Zellrahmen 4 auf einer gegenüberliegenden zweiten Flachseite der Anionen-Austauschermembran 2 angeordnet ist.

Durch axial fluchtende oder zumindest teilweise fluchtende Durchbrüche in den Elektrolysezellen 1 und in den Flachdichtungen 23, sowie in etwaig vorhandenen und in Fig. 2 ersichtlichen Bipolarplatten 28, sind zumindest ein erster Strömungskanal 7 und ein zweiter Strömungskanal 8 gebildet. Die Zellrahmen 3 bzw. 4 umgrenzen jeweils einen Innenbereich 5, der im Wesentlichen als zentraler Durchbruch in diesen im Wesentlichen plattenförmigen bzw. flächigen Elementen gebildet ist. Der zumindest eine erste Strömungskanal 7 und der zumindest eine zweite Strömungskanal 8 sind in radialer Richtung zur Zellachse 6 beabstandet und in Bezug auf die Zellachse 6 einander gegenüberliegend positioniert.

Weiters ist zumindest eine Ausström-Kanalstruktur 9, welche mit dem ersten Strömungskanal 7 und mit dem Innenbereich 5 fluidisch gekoppelt ist, vorgesehen. Zudem ist eine Einström-Kanalstruktur 10 vorgesehen, welche mit dem zweiten Strömungskanal 8 und mit dem Innenbereich 5 des jeweiligen Zellrahmens 3, 4 fluidisch gekoppelt ist. Die Ausström-Kanalstruktur 9 und/oder die Einström-Kanalstruktur 10 umfassen jeweils zumindest zwei Teilkanäle 12a, 12c, bzw. 12d, 12f, welche Teilkanäle 12 unmittelbar in den ersten Strömungskanal 7 münden und/oder unmittelbar aus dem zweiten Strömungskanal 8 austreten, wobei jeder der Teilkanäle 12 mit dem Innenbereich 5 fluidisch gekoppelt ist. Die Einström-Kanalstruktur 10 und/oder die Ausström-Kanalstruktur 9 können, wie beispielhaft dargestellt, durch sich verteilende bzw. durch fächerförmig verlaufende Teilkanäle an bzw. in den Zellrahmen 3, 4 gebildet sein. Dementsprechend sind im Wesentlichen dreieckförmig umgrenzte Mündungsabschnitte ausgehend vom zweiten Strömungskanal 8 in Richtung zu den Innenbereichen 5 der Zellrahmen 3, 4 geschaffen und im Wesentlichen dreieckförmige Zusammenführungszonen ausgehend von den Innenbereichen 5 der Zellrahmen 3, 4 in Richtung zu dem ersten Strömungskanal 7 geschaffen.

Des Weiteren ist in Fig. 3 in schematischer Form angedeutet, dass der zumindest eine erste Zellrahmen 3 und der zumindest eine zweite Zellrahmen 4 baulich identisch ausgebildet und um der Vertikalachse 16 um 180° gewendet angeordnet sein können. In weiterer Folge kann eine mögliche Ausführungsform sein, dass der zumindest eine erste Zellrahmen 3 und der zumindest eine zweite Zellrahmen 4 gegenüber der Anionen-Austauschermembran 2 derart angeordnet sind, dass die jeweilige Flachseite der Zellrahmen 3 bzw. 4 ohne Teilkanäle 12 der Anionen-Austauschermembran 2 nächstliegend angeordnet ist. Es kann vorgesehen sein, dass die jeweilige Flachseite der Zellrahmen 3 bzw. 4, auf welcher keineTeilkanäle 12 ausgebildet sind, mit der Anionen-Austauschermembran 2 durch Verkleben, Verschweißen, und/oder Verpressen formstabil verbunden ist. Somit ist die Verbindung zumindest eines Zellrahmens 3 bzw. 4 mit der Anionen-Austauschermembran 2 gas- und flüssigkeitsdicht bzw. im Wesentlichen technisch dicht. Die typischerweise nutförmig ausgebildeten Teilkanäle 12 sind somit auf bzw. in der von der Anionen-Austauschermembran 2 abgewandten Flachseite des ersten und zweiten Zellrahmens 3, 4 ausgebildet. Somit kann aus jeweils einem zumindest ersten Zellrahmen 3, jeweils einem zweiten Zellrahmen 4 und zumindest einer Anionen-Austauschermembran 2 eine Baugruppe bzw. eine Elektrolysezelle 1 gebildet werden. Der jeweilige Innenbereich 5 eines Zellrahmens 3 bzw. 4 bildet somit jeweils eine Halbzelle an je einer Seite der Anionen-Austauschermembran 2 aus. Der Prozess der Elektrolyse wird in einer Elektrolysezelle 1 jeweils unter Einbeziehung einer Anoden-Halbzelle und einer Kathoden-Halbzelle, welche mittels der Anionen-Austauschermembran 2 fluidisch getrennt sind, durchgeführt.

In Fig. 3 ist schematisch angedeutet, dass mehrere Elektrolysezellen 1a bzw. 1b entlang der Zellachse 6 angeordnet werden können und somit eine Elektrolysevorrichtung 25 bzw. ein Stack gebildet wird, welche Elektrolysevorrichtung 25 in Fig. 1 und Fig.2 dargestellt ist. Beispielsweise kann bei einer derartigen Aneinanderreihung von Elektrolysezellen 1x vorgesehen sein, dass der Querschnitt zumindest eines Strömungskanals 7 bzw. 8, welche durch seriell aufeinanderfolgende Durchbrüche in den einzelnen im wesentlichen plattenförmigen bzw. flächigen Bauteilen der Elektrolysezelle 1 gebildet sind, entlang der Zellachse 6 zunehmend sich verjüngend oder zunehmend sich vergrößernd ausgeführt ist. Somit kann über die einzelnen Elektrolysezellen 1x hinweg ein wie bereits beschriebener vorteilhafter Strömungszustand der Betriebsmedien für die seriell aneinandergereihten Elektrolysezellen 1a bzw. 1b geschaffen werden. Weiters ist in Fig. 3 die mögliche Anordnung von Flachdichtungen 23 zwischen einzelnen Elektrolysezellen 1 gezeigt. Es kann vorgesehen sein, dass jeweils vor und nach einer Elektrolysezelle jeweils eine Flachdichtung 23 vorgesehen ist. Auch kann vorgesehen sein, dass zwischen Elektrolysezellen 1 Bipolarplatten 28 vorgesehen sind, um die Spannungsversorgung der Membran-Elektrodeneinheit 27 und somit den Prozess der Elektrolyse zu gewährleisten. Eine Membran-Elektrodeneinheit 27 ist, dem jeweiligen Innenbereich 5 eines Zellrahmens 3 bzw. 4, also der jeweiligen Halbzellen einer Elektrolysezelle 1, zugeordnet aus wenigstens einer Elektrode und/oder einer Diffusions- bzw. Transportschicht gebildet. Die Elektrode und/oder die zugehörige Diffusionsschicht ist dabei mit der, den jeweiligen Innenbereich 5 der Elektrolysezelle 1 begrenzenden Fläche der Anionen-Austauschermembran 2 wenigstens elektrisch leitend verbunden.

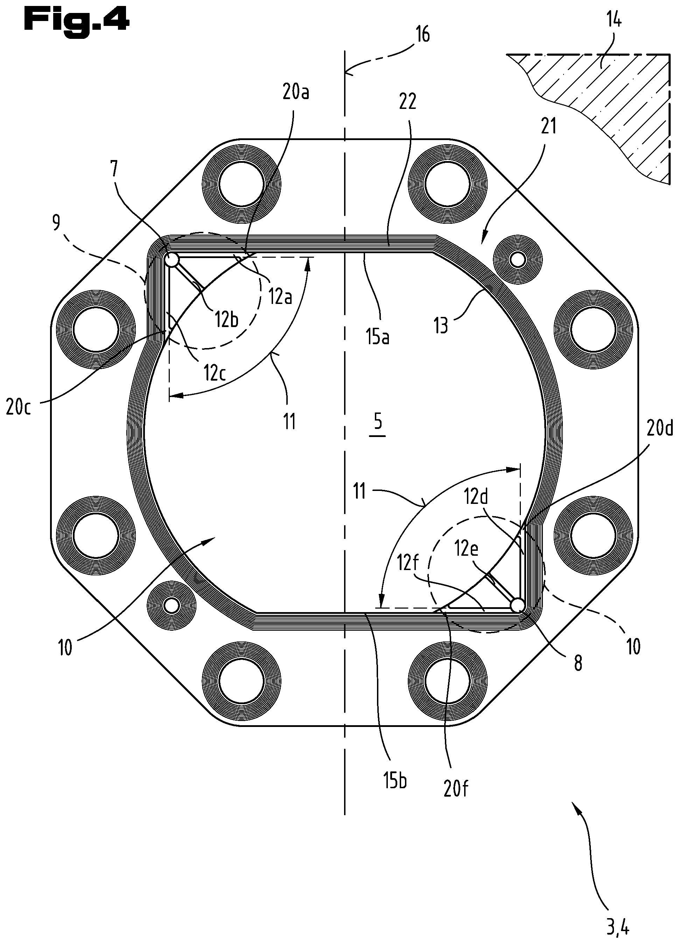

In der Fig. 4 ist eine weitere und gegebenenfalls für sich eigenständige Ausführungsform des Zellrahmens 3 bzw. des Zellrahmens 4 in vereinfachter und schematischer Darstellung gezeigt, wobei für gleiche Teile gleiche Bezugszeichen bzw. Bauteilbezeichnungen wie in den vorangegangenen Fig. 1-3 verwendet werden. Der Zellrahmen 3 bzw. 4 kann derart ausgestaltet sein, dass die Ausström-Kanalstruktur 9 und/oder die Einström-Kanalstruktur 10 zumindest zwei in einem Winkel 11 zueinander verlaufende Teilkanäle 12a, 12c, bzw. 12d, 12f umfassen, welche Teilkanäle 12 unmittelbar in den ersten Strömungskanal 7 münden und/oder unmittelbar aus dem zweiten Strömungskanal 8 austreten. Die Teilkanäle 12 sind mit dem Innenbereich 5 fluidisch gekoppelt, stehen also mit dem Innenbereich 5 in Strömungsverbindung. Die Teilkanäle 12 der Ausström-Kanalstruktur 9 und der Einström-Kanalstruktur 10 können auf einer Flachseite des jeweiligen Zellrahmens 3 bzw. 4 durch jeweilige nutartige Vertiefungen 17 oder Einprägungen in den Zellrahmen 3 bzw. 4 gebildet sein. Zweckmäßig ist es, wenn in diesen Flachseiten rinnenartige, also in Bezug auf ihren Querschnitt abgerundete Vertiefungen 17 ausgebildet sind, in welchen die Betriebsmedien der Elektrolysezelle 25 - Fig. 2 - geleitet werden können.

Weiters kann vorgesehen sein, dass ein Zellrahmen 3 bzw. 4 jeweils eine innere Begrenzungskante 13 aufweist, welche innere Begrenzungskante 13 wiederum in einem auf eine Vertikalebene 14 - Fig. 2 - bezogenem unteren Bereich und/oder in einem oberen Bereich einen unteren und/oder einen oberen geradlinigen Teilabschnitt 15a bzw. 15b aufweisen kann. Hierbei kann vorgesehen sein, dass im unteren geradlinigen Teilabschnitt 15b zumindest ein Teilkanal 12f der Einström-Kanalstruktur 10 parallel oder im Wesentlichen parallel bzw. fluchtend zum unteren geradlinigen Teilabschnitt verläuft. Gleichermaßen kann vorgesehen sein, dass im oberen geradlinigen Teilabschnitt 15a zumindest ein Teilkanal 12a der Ausström-Kanalstruktur 9 parallel oder im Wesentlichen parallel bzw. fluchtend zum oberen geradlinigen Teilabschnitt 15a verläuft. In der gezeigten Ausführungsform ist ersichtlich, dass somit zumindest der Teilkanal 12a der Ausström-Kanalstruktur 9 mit dem Innenbereich 5 eines Zellrahmens 3 bzw. 4 bezogen auf die vertikal verlaufende Rahmenebene 14 an einem obersten Teilabschnitt der inneren Begrenzungskante 13 mit dem Innenbereich 5 fluidisch gekoppelt ist. Wie in Fig. 4 dargestellt, besteht die Möglichkeit, dass die innere Begrenzungskante 13 eines Zellrahmens 3 bzw. 4 gemäß einer Kreisform ausgebildet ist oder zumindest abschnittsweise eine Kreisform aufweist. Es ist weiters eine Ausführungsform möglich, bei der die innere Begrenzungskante 13 eines Zellrahmens 3 bzw. 4 gemäß einer Ellipsenform, wobei die Ellipsen-Hauptachse oder der Ellipsen-Nebenachse parallel oder im Wesentlichen parallel zur Vertikalachse 16 verläuft, ausgebildet ist.

Eine mögliche Ausgestaltungsform des Zellrahmens 3, bzw. 4 ist, dass die Teilkanäle 12 in Richtung vom jeweiligen Strömungskanal 7 bzw. 8 zum Innenbereich 5 des jeweiligen Zellrahmens 3 bzw. 4 sich vergrößernd, insbesondere trompetenförmig ausgestaltet sind. Diese mögliche Ausgestaltungsform bringt die bereits beschriebenen Vorteile mit sich. Auch kann vorgesehen sein, dass die zumindest zwei Teilkanälen 12a, 12c bzw. 12d, 12f der jeweiligen Ausström-Kanalstruktur 9 und/oder Einström-Kanalstruktur 10 in einem Winkel 11 im Bereich zwischen 27,5° und 135° zueinander verlaufen. Insbesondere können die jeweils zwei Teilkanäle 12a, 12c bzw. 12d, 12f in einem Winkel 11 von 90° angeordnet sein. Zwischen den zumindest zwei Teilkanälen 12a, 12c bzw. 12d, 12f der jeweiligen Ausström-Kanalstruktur 9 und/oder der Einström-Kanalstruktur 10 kann jeweils zumindest ein dritter Teilkanal 12b bzw. 12e angeordnet sein.

Besonders vorteilhaft kann eine erweiterte Ausführungsform sein, bei der die Teilkanäle 12 der Ausström-Kanalstruktur 9 und/oder der Einström-Kanalstruktur 10 jeweils unterschiedliche Querschnittsformen und/oder Flächenquerschnitte aufweisen. Beispielsweise kann der Teilkanal 12b einen größeren Flächen- bzw. Strömungsquerschnitt als der Teilkanal 12a aufweisen, um im Betrieb der Elektrolysezelle den Abtransport von im Betriebsmedium gelösten Gasblasen zu begünstigen. Gleichzeitig verstärkt sich dieser Effekt durch einen vom, bezogen auf den Flächenquerschnitt kleineren Teilkanal 12a induzierten Rückstaueffekt des Zweiphasengemisches im Innenraum bzw. Innenbereich 5 des jeweiligen Zellrahmens 3 bzw. 4, wodurch die Abfuhr der Gasblasen im Teilkanal 12b, welcher bezogen auf die vertikal verlaufende Rahmenebene 14 im obersten Bereich des Innenbereichs 5 liegt, verbessert sein kann.

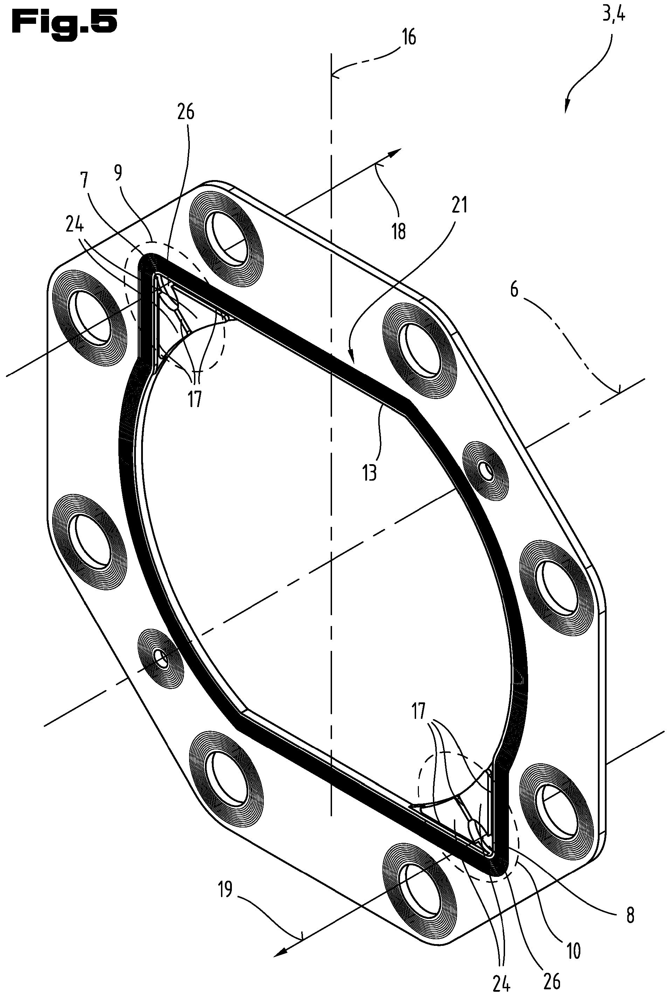

In der Fig. 5 ist eine weitere und gegebenenfalls für sich eigenständige Ausführungsform des Zellrahmens 3 bzw. des Zellrahmens 4 in perspektivischen Darstellung gezeigt, wobei wiederum für gleiche Teile gleiche Bezugszeichen bzw. Bauteilbezeichnungen wie in den vorangegangenen Darstellungen verwendet werden. Bei dieser Ausführungsform ist zu erkennen, dass zumindest eine umlaufend geschlossene Erhebung 21 ausgebildet ist, welche entlang der inneren Begrenzungskante 13 des Zellrahmens 3 bzw. 4 verläuft und dabei die Ausström-Kanalstruktur 9 und/oder die Einström-Kanalstruktur 10 einschließt. Diese zumindest eine umlaufend geschlossene Erhebung 21 kann ein Dichtungselement 22 ausbilden. Diese Erhebung 21 kann als wulstartige Erhöhung integral bzw. einteilig mit dem jeweiligen Zellrahmen 3 bzw. 4 ausgebildet sein, wobei die Erhebung 21 im Wesentlichen 1% bis 20%, vorzugsweise 10% der Dickenerstreckung in Richtung der Zellachse 6 eines nächstgelegenen entlang der Zellachse 6 angeordneten Elements aufweist. Wie in den Fig.1 bis Fig. 3 dargestellt, kann ein entlang der Zellachse 6 nächstliegend angeordnetes Element eine Flachdichtung 23 sein. Somit kann die Erhebung 21 vorzugsweise 10% Überstand gegenüber der Grund- bzw. Hauptfläche der Flachseite eines Zellrahmens 3 bzw. 4 bezogen auf die Dickenerstreckung der Flachdichtung 23 entlang der Zellachse 6 betragen.

Eine mögliche Ausgestaltung der gezeigten Ausführungsform ist, dass ein Zellrahmen 3 bzw. 4 auf zumindest einer Flachseite oder auf beiden einander gegenüberliegenden Flachseiten vereinzelte und/oder zusammenhängende, oberflächlich aufgeraute Zonen aufweist. Dabei kann die Oberflächenrauigkeit dieser Zonen gegenüber der Oberflächenrauigkeit der restlichen Flachseite erhöht sein. Es können diese oberflächlich aufgerauten Zonen vereinzelt angeordnet sein. Insbesondere kann es zweckmäßig sein, wenn die Teilkanal-Zwischenbereiche 24 eine erhöhte Oberflächenrauigkeit gegenüber der restlichen Oberfläche der gleichen Flachseite eines Zellrahmens 3 bzw. 4 aufweisen. Ebenso können die oberflächlich aufgerauten Zonen auf der zur Ausström-Kanalstruktur 9 und Einström-Kanalstruktur 10 gegenüberliegenden Flachseite des Zellrahmens 3, bzw. 4 vorgesehen sein, um die Anordnung bzw. die Positionierung und/oder die Montage der Anionen-Austauschermembran 2 in Verbindung mit den Zellrahmen 3, 4 zu begünstigen.

Auch kann vorgesehen sein, dass die Strömungskanäle 7 bzw. 8 durch ellipsenförmige Durchbrüche 26 unter anderem in den Elementen der Elektrolysezelle 1x - Fig. 2 - gebildet sind. Die ellipsenförmigen Durchbrüche 26 können in allen Elementen der Elektrolysezellen 1x vorgesehen sein, wie beispielsweise in den Zellrahmen 3 bzw. 4, der Anionen-Austauschermembranen 2, Flachdichtungen 23 und/oder Bipolarplatten 28.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Elektrolysezelle
- 2: Anionen-Austauschermembran
- 3: Erster Zellrahmen
- 4: Zweiter Zellrahmen
- 5: Innenbereich
- 6: Zellachse
- 7: Erster Strömungskanal
- 8: Zweiter Strömungskanal
- 9: Ausström-Kanalstruktur
- 10: Einström-Kanalstruktur
- 11: Winkel
- 12: Teilkanal
- 13: Innere Begrenzungskante
- 14: Vertikal verlaufende Rahmenebene
- 15: Geradliniger Teilabschnitt
- 16: Vertikalachse
- 17: Nutartige Vertiefungen
- 18: Erste Strömungskanal-Richtung
- 19: Zweite Strömungskanal-Richtung
- 20: Aufweitung
- 21: Erhebung
- 22: Dichtungselement
- 23: Flachdichtung
- 24: Teilkanal-Zwischenbereich
- 25: Elektrolysevorrichtung
- 26: Ellipsenförmige Durchbrüche
- 27: Membran-Elektrodeneinheit
- 28: Bipolarplatte

## Patentansprüche

1. Elektrolysezelle (1) zur Erzeugung von gasförmigem Wasserstoff, umfassend
- zumindest eine Anionen-Austauschermembran (2),
- zumindest einen ersten Zellrahmen (3) und zumindest einen zweiten Zellrahmen (4), welche jeweils einen Innenbereich (5) umgrenzen der zur Aufnahme eines Elektrolyten und/oder einer Membran-Elektrodeneinheit (27) vorgesehen ist, und welche ersten und zweiten Zellrahmen (3, 4) in Bezug auf deren jeweils aufgespannte Rahmenebenen in Richtung einer Zellachse (6) zueinander beabstandet sind, wobei der erste Zellrahmen (3) auf einer ersten Flachseite der Anionen-Austauschermembran (2) mittelbar oder unmittelbar flüssigkeits- und gasabdichtend anliegt und der zweite Zellrahmen (4) auf einer gegenüberliegenden zweiten Flachseite der Anionen-Austauschermembran (2) mittelbar oder unmittelbar flüssigkeits-und gasabdichtend anliegt,
- zumindest einen ersten Strömungskanal (7) und zumindest einen zweiten Strömungskanal (8), welche jeweils durch fluidisch kommunizierende Durchbrüche im ersten und zweiten Zellrahmen (3, 4) und in der Anionen-Austauschermembran (2) gebildet sind und deren Hauptrichtung parallel oder im Wesentlichen parallel zur Zellachse (6) verläuft,
- wobei der erste und der zweite Zellrahmen (3, 4) jeweils aufweist
∘ zumindest eine Ausström-Kanalstruktur (9), welche mit dem ersten Strömungskanal (7) und mit dem Innenbereich (5) des jeweiligen Zellrahmens (3, 4) fluidisch verbunden ist, und
∘ zumindest eine Einström-Kanalstruktur (10), welche mit dem zweiten Strömungskanal (8) und mit dem Innenbereich (5) des jeweiligen Zellrahmens (3, 4) fluidisch verbunden ist,
- wobei der zumindest eine erste Strömungskanal (7) und der zumindest eine zweite Strömungskanal (8) in radialer Richtung zur Zellachse (6) beabstandet und in Bezug auf die Zellachse (6) einander gegenüberliegend positioniert sind,
- wobei die Ausström-Kanalstruktur (9) und/oder die Einström-Kanalstruktur (10) jeweils zumindest zwei in einem Winkel (11) zueinander verlaufende Teilkanäle (12a, 12c, 12d, 12f) umfasst, welche Teilkanäle (12a, 12c, 12d, 12f) unmittelbar in den zumindest einen ersten Strömungskanal (7) münden und/oder unmittelbar aus dem zumindest einen zweiten Strömungskanal (8) austreten, und
- wobei jeder der Teilkanäle (12a, 12c, 12d, 12f) mit dem Innenbereich (5) des jeweiligen Zellrahmens (3, 4) fluidisch verbunden ist
**dadurch gekennzeichnet, dass**
der Querschnitt des zumindest einen ersten Strömungskanals (7) und/oder des zumindest einen zweiten Strömungskanals (8) der Elektrolysezelle (1) entlang der Zellachse (6) zunehmend verjüngend oder zunehmend vergrößernd ausgebildet ist.

2. Elektrolysezelle (1) nach Anspruch 1, **dadurch gekennzeichnet, dass** der erste und/oder zweite Zellrahmen (3, 4) eine innere Begrenzungskante (13) aufweist, welche einen Begrenzungsabschnitt des Innenbereichs (5) definiert, und welche innere Begrenzungskante (13) in Bezug auf eine vertikal verlaufende Rahmenebene (14) des ersten und/oder zweiten Zellrahmens (3, 4) im oberen Bereich und/oder im unteren Bereich einen oberen und/oder einen unteren geradlinigen Teilabschnitt (15a, 15b) aufweist, wobei im unteren geradlinigen Teilabschnitt (15b) zumindest ein Teilkanal (12f) der Einström-Kanalstruktur (10) parallel oder fluchtend zum unteren geradlinigen Teilabschnitt (15b) verläuft und wobei im oberen geradlinigen Teilabschnitt (15a) zumindest ein Teilkanal (12a) der Ausström-Kanalstruktur (9) parallel oder fluchtend zum oberen geradlinigen Teilabschnitt (15a) verläuft.

3. Elektrolysezelle (1) nach einem der vorhergehenden Ansprüche, **dadurch gekennzeichnet, dass** zumindest ein Teilkanal (12a) der Ausström-Kanalstruktur (9) mit dem Innenbereich (5) des ersten und/oder zweiten Zellrahmens (3, 4) in Bezug auf die vertikal verlaufende Rahmenebene (14) an einem obersten Teilabschnitt der inneren Begrenzungskante (13) mit dem Innenbereich (5) fluidisch gekoppelt ist.

4. Elektrolysezelle (1) nach einem der vorhergehenden Ansprüche, **dadurch gekennzeichnet, dass** der zumindest eine erste Zellrahmen (3) und der zumindest eine zweite Zellrahmen (4) baulich und geometrisch identisch ausgebildet sind und in Bezug auf eine in der vertikal verlaufenden Rahmenebene (14) verlaufende Vertikalachse (16) um 180° gewendet angeordnet sind.

5. Elektrolysezelle (1) nach einem der vorhergehenden Ansprüche, **dadurch gekennzeichnet, dass** der zumindest eine erste Zellrahmen (3) und der zumindest eine zweite Zellrahmen (4) jeweils eine Ausström-Kanalstruktur (9) und jeweils eine Einström-Kanalstruktur (10) aufweisen und dass die jeweils eine Ausström-Kanalstruktur (9) und die jeweils eine Einström-Kanalstruktur (10) des jeweiligen Zellrahmens (3, 4) durch jeweilige nutartige Vertiefungen (17) oder Einprägungen in nur einer der beiden Flachseiten des jeweiligen Zellrahmens (3, 4) gebildet sind.

6. Elektrolysezelle (1) nach Anspruch 5, **dadurch gekennzeichnet, dass** der zumindest eine erste Zellrahmen (3) und der zumindest eine zweite Zellrahmen (4) gegenüber der Anionen-Austauschermembran (2) derart angeordnet sind, dass die jeweilige Flachseite der Zellrahmen (3, 4) ohne nutartige Vertiefungen (17) oder Einprägungen der Anionen-Austauschermembran (2) nächstliegend zugeordnet ist.

7. Elektrolysezelle (1) nach Anspruch 6, **dadurch gekennzeichnet, dass** die Anionen-Austauschermembran (2) mit der nächstliegend zugeordneten Flachseite des zumindest einen ersten Zellrahmens (3) und/oder des zumindest einen zweiten Zellrahmens (4) durch Verkleben, Verschweißen und/oder Verpressen flüssigkeits- und gasdicht verbunden ist.

8. Elektrolysezelle (1) nach einem der vorhergehenden Ansprüche, **dadurch gekennzeichnet, dass** die innere Begrenzungskante (13) des ersten und/oder zweiten Zellrahmens (3, 4) abschnittsweise eine Kreisbogenform oder eine Ellipsenform aufweist und bei einer Ellipsenform deren Ellipsen-Hauptachse oder deren Ellipsen-Nebenachse parallel oder im Wesentlichen parallel zur Vertikalachse (16) orientiert ist.

9. Elektrolysezelle (1) nach einem der vorhergehenden Ansprüche, **dadurch gekennzeichnet, dass** der zumindest eine erste Strömungskanal (7) in eine erste Strömungskanal-Richtung (18) entlang der Zellachse (6) zunehmend vergrößernd ausgeführt ist und dass der zumindest eine zweite Strömungskanal (8) in eine zur ersten Strömungskanal-Richtung (18) entgegengesetzte, zweite Strömungskanal-Richtung (19) zunehmend verjüngend ausgeführt ist.

10. Elektrolysezelle (1) nach einem der vorhergehenden Ansprüche, **dadurch gekennzeichnet, dass** der Strömungsquerschnitt zumindest eines Teilkanals (12) der Ausström-Kanalstruktur (9) und/oder der Einström-Kanalstruktur (10) ausgehend vom jeweiligen Strömungskanal (7, 8) in Richtung zum Innenbereich (5) eine Aufweitung (20) aufweist, welche Aufweitung (20) insbesondere trompetenförmig verlaufend ausgeführt sind.

11. Elektrolysezelle (1) nach einem der vorhergehenden Ansprüche, **dadurch gekennzeichnet, dass** die zumindest zwei Teilkanäle (12a, 12b) der Ausström-Kanalstruktur (9) und/oder die zumindest zwei Teilkanäle (12d, 12f) der Einström-Kanalstruktur (10) in einem Winkel (11) im Bereich zwischen 27,5° und 135°, insbesondere in einem Winkel (11) von 90°, zueinander verlaufen und dass zwischen den zumindest zwei Teilkanälen (12a, 12b) der Ausström-Kanalstruktur (9) zumindest ein dritter Teilkanal (12b) angeordnet ist und/oder zwischen den zumindest zwei Teilkanälen (12d, 12f) der Einström-Kanalstruktur (10) zumindest ein dritter Teilkanal (12e) angeordnet ist.

12. Elektrolysezelle (1) nach einem der vorhergehenden Ansprüche, **dadurch gekennzeichnet, dass** entlang der inneren Begrenzungskante (13) des zumindest einen ersten Zellrahmens (3) und/oder des zumindest einen zweiten Zellrahmens (4) wenigstens eine die Ausström-Kanalstruktur (9) und/oder die Einström-Kanalstruktur (10) einschließende und umlaufend geschlossene Erhebung (21) gegenüber der Grundfläche des jeweiligen Zellrahmens (3, 4) ausgebildet ist, welche wenigstens eine Erhebung (21) als Dichtungselement (22) vorgesehen ist.

13. Elektrolysezelle (1) nach Anspruch 12, **dadurch gekennzeichnet, dass** die wenigstens eine umlaufend geschlossene Erhebung (21) zumindest auf einer Flachseite des zumindest einen ersten Zellrahmens (3) und/oder des zumindest einen zweiten Zellrahmens (4) ausgebildet ist und eine Höhe von im Wesentlichen 1% bis 20%, vorzugsweise etwa 10% der Dickenerstreckung in Richtung der Zellachse (6) einer an jeweils dieser zumindest einen Flachseite entlang der Zellachse (6) nächstliegend angeordneten plattenförmigen Flachdichtung (23) aufweist.

14. Elektrolysezelle (1) nach einem der vorhergehenden Ansprüche, **dadurch gekennzeichnet, dass** der zumindest eine erste Zellrahmen (3) und/oder der zumindest eine zweite Zellrahmen (4) auf nur einer Flachseite oder auf beiden einander gegenüberliegenden Flachseiten vereinzelte und/oder zusammenhängende Oberflächenabschnitte mit höherer Oberflächenrauigkeit als die restliche Oberfläche aufweist.

15. Elektrolysezelle (1) nach einem der vorhergehenden Ansprüche, **dadurch gekennzeichnet, dass** Teilkanal-Zwischenbereiche (24) zwischen den Teilkanälen (12a, 12c, 12d, 12f) eine höhere Oberflächenrauigkeit aufweisen als die restliche Oberfläche des zumindest einen ersten Zellrahmens (3) und/oder des zumindest einen zweiten Zellrahmens (4) auf der Flachseite mit den nutartigen Vertiefungen (17) aufweist.

16. Elektrolysezelle (1) nach einem der vorhergehenden Ansprüche, **dadurch gekennzeichnet, dass** der zumindest eine erste Strömungskanal (7) und/oder der zumindest eine zweite Strömungskanal (8) durch fluidisch kommunizierende ellipsenförmige Durchbrüche zumindest im ersten und zweiten Zellrahmen (3, 4) und in der Anionen-Austauschermembran (2) gebildet sind.

17. Elektrolysezelle (1) nach einem der vorhergehenden Ansprüche, **dadurch gekennzeichnet, dass** der zumindest eine erste Zellrahmen (3) und/oder der zumindest eine zweite Zellrahmen (4) aus Kunststoff, insbesondere im Spritzgussverfahren einteilig bzw. integral herstellbar sind/ist.

18. Elektrolysezelle (1) nach Anspruch 17, **dadurch gekennzeichnet, dass** die Durchbrüche zur Bildung des zumindest einen ersten Strömungskanals (7) und oder des zumindest einen zweiten Strömungskanals (8) und/oder die Teilkanäle (12) und/oder die umlaufend geschlossene Erhebung (21) im zumindest einen ersten Zellrahmen (3) und/oder im zumindest einen zweiten Zellrahmen (4) einteilig bzw. integral herstellbar sind/ist.

19. Verfahren zur Herstellung zumindest eines entlang der Zellachse (6) verlaufenden Strömungskanals (7, 8) durch zumindest zwei, entlang der Zellachse (6) angeordneten Elektrolysezellen (1a, 1b) gemäß einem der vorhergehenden Ansprüche wobei,
- zumindest die Elektrolysezellen (1a, 1b) entlang der Zellachse (6) aneinandergereiht angeordnet und entlang der Zellachse (6) zueinander gehalten werden
- und mittels einer Bohrvorrichtung der zumindest eine Strömungskanal (7, 8) entlang der Zellachse (6) sich verjüngend oder sich vergrößernd ausgebildet wird.

## Claims

1. An electrolytic cell (1) for producing gaseous hydrogen, comprising
- at least one anion exchange membrane (2),
- at least one first cell frame (3) and at least one second cell frame (4), wherein each delimits an inner region (5) which is provided for receiving an electrolyte and/or a membrane electrode unit (27), and which first and second cell frames (3, 4) are spaced apart from one another in the direction of a cell axis (6) with respect to their respective defined frame planes, wherein the first cell frame (3) abuts on a first flat side of the anion exchange membrane (2) directly or indirectly in a liquid- and gas-sealing manner and the second cell frame (4) abuts on an opposite second flat side of the anion exchange membrane (2) directly or indirectly in a liquid- and gas-sealing manner,
- at least one first flow channel (7) and at least one second flow channel (8), which are each formed by fluidically communicating apertures in the first and second cell frame (3, 4) and in the anion exchange membrane (2) and whose main direction extends parallel or substantially parallel to the cell axis (6),
- wherein the first and second cell frame (3, 4) each comprise
∘ at least one outflow channel structure (9), which is fluidically coupled to the first flow channel (7) and to the inner region (5) of the respective cell frame (3, 4), and
∘ at least one inflow channel structure (10), which is fluidically coupled to the second flow channel (8) and to the inner region (5) of the respective cell frame (3, 4),
- wherein the at least one first flow channel (7) and the at least one second flow channel (8) are spaced apart in the radial direction with respect to the cell axis (6) and are positioned opposite one another with respect to the cell axis (6),
- wherein the outflow channel structure (9) and/or the inflow channel structure (10) each comprises at least two partial channels (12a, 12c, 12d, 12f) extending at an angle (11) to one another, which partial channels (12a, 12c, 12d, 12f) open directly into the at least one first flow channel (7) and/or emerge directly from the at least one second flow channel (8), and
- wherein each of the partial channels (12a, 12c, 12d, 12f) is fluidically connected to the inner region (5) of the respective cell frame (3, 4),
**characterized in that**
the cross-section of the at least one first flow channel (7) and/or of the at least one second flow channel (8) of the electrolytic cell (1) is configured to be increasingly tapering or increasingly enlarging along the cell axis (6).

2. The electrolytic cell (1) according to claim 1, **characterized in that** the first and/or second cell frame (3, 4) is provided with an inner limiting edge (13) which defines a limiting section of the inner region (5), and which inner limiting edge (13) has, in relation to a vertically extending frame plane (14) of the first and/or second cell frame (3, 4) an upper and/or a lower straight section (15a, 15b) in the upper region and/or in the lower region, wherein in the lower straight section (15b) at least one partial channel (12f) of the inflow channel structure (10) extends parallel to or in alignment with the lower straight section (15b) and wherein in the upper straight section (15a) at least one partial channel (12a) of the outflow channel structure (9) extends parallel to or in alignment with the upper straight section (15a).

3. The electrolytic cell (1) according to any of the preceding claims, **characterized in that** at least one partial channel (12a) of the outflow channel structure (9) is fluidically coupled to the inner region (5) of the first and/or second cell frame (3, 4) with respect to the vertically extending frame plane (14) at an uppermost section of the inner limiting edge (13) with the inner region (5).

4. The electrolytic cell (1) according to any of the preceding claims, **characterized in that** the at least one first cell frame (3) and the at least one second cell frame (4) are structurally and geometrically identical and are arranged turned through 180° with respect to a vertical axis (16) extending in the vertically extending frame plane (14).

5. The electrolytic cell (1) according to any of the preceding claims, **characterized in that** the at least one first cell frame (3) and the at least one second cell frame (4) each have an outflow channel structure (9) and an inflow channel structure (10), and **in that** the respective outflow channel structure (9) and the respective inflow channel structure (10) of the respective cell frame (3, 4) are formed by respective groove-like indentations (17) or embossings in only one of the two flat sides of the respective cell frame (3, 4).

6. The electrolytic cell (1) according to claim 5, **characterized in that** the at least one first cell frame (3) and the at least one second cell frame (4) are arranged opposite the anion exchange membrane (2) in such a way that the respective flat side of the cell frames (3, 4) without groove-like indentations (17) or embossings is associated closest to the anion-exchanger membrane (2).

7. The electrolytic cell (1) according to claim 6, **characterized in that** the anion exchange membrane (2) is connected in a liquid-tight and gas-tight manner to the nearest associated flat side of the at least one first cell frame (3) and/or the at least one second cell frame (4) by bonding, welding and/or pressing.

8. The electrolytic cell (1) according to any of the preceding claims, **characterized in that** the inner limiting edge (13) of the first and/or second cell frame (3, 4) has a circular arc shape or an elliptical shape in sections and, in the case of an elliptical shape, its main elliptical axis or its secondary elliptical axis is oriented parallel or essentially parallel to the vertical axis (16).

9. The electrolytic cell (1) according to any of the preceding claims, **characterized in that** the at least one first flow channel (7) is configured to be increasingly enlarging in a first flow channel direction (18) along the cell axis (6) and **in that** the at least one second flow channel (8) is configured to be increasingly tapering in a second flow channel direction (19) opposite to the first flow channel direction (18).

10. The electrolytic cell (1) according to any of the preceding claims, **characterized in that** the flow cross-section of at least one partial channel (12) of the outflow channel structure (9) and/or of the inflow channel structure (10) is provided with a widening (20) starting from the respective flow channel (7, 8) in the direction of the inner region (5), which widening (20) is configured in particular to be trumpet-shaped.

11. The electrolytic cell (1) according to any of the preceding claims, **characterized in that** the at least two partial channels (12a, 12b) of the outflow channel structure (9) and/or the at least two partial channels (12d, 12f) of the inflow channel structure (10) extend at an angle (11) in the range between 27.5° and 135°, in particular at an angle (11) of 90°, to one another and that at least a third partial channel (12b) is arranged between the at least two partial channels (12a, 12b) of the outflow channel structure (9) and/or at least a third partial channel (12e) is arranged between the at least two partial channels (12d, 12f) of the inflow channel structure (10).

12. The electrolytic cell (1) according to any of the preceding claims, **characterized in that** along the inner limiting edge (13) of the at least one first cell frame (3) and/or of the at least one second cell frame (4) at least one protuberance (21) enclosing the outflow channel structure (9) and/or the inflow channel structure (10) and circumferentially closed is formed opposite the base surface of the respective cell frame (3, 4), which at least one protuberance (21) is provided as a sealing element (22).

13. The electrolytic cell (1) according to claim 12, **characterized in that** the at least one circumferentially closed protuberance (21) is formed at least on one flat side of the at least one first cell frame (3) and/or of the at least one second cell frame (4) and has a height of essentially 1% to 20%, preferably approximately 10%, of the thickness extension in the direction of the cell axis (6) of a plate-shaped flat gasket (23) arranged closest to this at least one flat side along the cell axis (6).

14. The electrolytic cell (1) according to any of the preceding claims, **characterized in that** the at least one first cell frame (3) and/or the at least one second cell frame (4) has, on only one flat side or on both opposite flat sides, isolated and/or continuous surface sections with a higher surface roughness than the rest of the surface.

15. The electrolytic cell (1) according to any of the preceding claims, **characterized in that** partial channel intermediate regions (24) between the partial channels (12a, 12c, 12d, 12f) have a higher surface roughness than the remaining surface of the at least one first cell frame (3) and/or of the at least one second cell frame (4) on the flat side with the groove-like indentations (17).

16. The electrolytic cell (1) according to any of the preceding claims, **characterized in that** the at least one first flow channel (7) and/or the at least one second flow channel (8) are formed by fluidically communicating elliptical apertures at least in the first and second cell frames (3, 4) and in the anion exchange membrane (2).

17. The electrolytic cell (1) according to any of the preceding claims, **characterized in that** the at least one first cell frame (3) and/or the at least one second cell frame (4) are made of plastic and in particular may be produced in one piece or integrally by injection molding.

18. The electrolytic cell (1) according to claim 17, **characterized in that** the apertures for forming the at least one first flow channel (7) and/or the at least one second flow channel (8) and/or the partial channels (12) and/or the circumferentially closed protuberance (21) in the at least one first cell frame (3) and/or in the at least one second cell frame (4) are/may be produced in one piece or integrally.

19. A method for producing at least one flow channel (7, 8) extending along the cell axis (6) by at least two electrolytic cells (1a, 1b) arranged along the cell axis (6) according to any of the preceding claims, wherein,
- at least the electrolysis cells (1a, 1b) are arranged in a row along the cell axis (6) and are held relative to one another along the cell axis (6)
- and the at least one flow channel (7, 8) is configured to be tapering or enlarging along the cell axis (6) by means of a drilling device.

## Revendications

1. Cellule d'électrolyse (1) pour la production d'hydrogène gazeux, comprenant :
- au moins une membrane échangeuse d'anions (2),
- au moins un premier cadre de cellule (3) et au moins un deuxième cadre de cellule (4), qui délimitent chacun une zone intérieure (5) prévue pour recevoir un électrolyte et/ou un ensemble membrane-électrodes (27), et ces premier et deuxième cadres de cellule (3, 4) étant espacés l'un de l'autre par rapport à leurs plans de cadre respectifs s'étendant dans la direction d'un axe de cellule (6), dans lequel le premier cadre de cellule (3) repose de manière indirecte ou directe, de manière étanche aux liquides et aux gaz, sur une première face plane de la membrane échangeuse d'anions (2), et le deuxième cadre de cellule (4) repose de manière indirecte ou directe, de manière étanche aux liquides et aux gaz, sur une deuxième face plane opposée de la membrane échangeuse d'anions (2),
- au moins un premier canal d'écoulement (7) et au moins un deuxième canal d'écoulement (8), qui sont chacun formés par des ouvertures en communication fluidique dans les premier et deuxième cadres de cellule (3, 4) et dans la membrane échangeuse d'anions (2), et dont la direction principale est parallèle ou globalement parallèle à l'axe de cellule (6),
- dans lequel les premier et deuxième cadres de cellule (3, 4) présentent chacun :
∘ au moins une structure de canal de sortie (9), qui est en communication fluidique avec le premier canal d'écoulement (7) et avec la zone intérieure (5) du cadre de cellule respectif (3, 4), et
∘ au moins une structure de canal d'entrée (10), qui est en communication fluidique avec le deuxième canal d'écoulement (8) et avec la zone intérieure (5) du cadre de cellule respectif (3, 4),
- dans lequel l'au moins un premier canal d'écoulement (7) et l'au moins un deuxième canal d'écoulement (8) sont espacés dans la direction radiale par rapport à l'axe de cellule (6) et sont positionnés de manière opposée l'un à l'autre par rapport à l'axe de cellule (6),
- dans lequel la structure de canal de sortie (9) et/ou la structure de canal d'entrée (10) comprennent chacune au moins deux canaux partiels (12a, 12c, 12d, 12f) s'étendant selon un angle (11) l'un par rapport à l'autre, ces canaux partiels (12a, 12c, 12d, 12f) débouchant directement dans l'au moins un premier canal d'écoulement (7) et/ou sortant directement de l'au moins un deuxième canal d'écoulement (8), et
- dans lequel chacun des canaux partiels (12a, 12c, 12d, 12f) est en communication fluidique avec la zone intérieure (5) du cadre de cellule respectif (3, 4),
**caractérisée en ce que**
la section transversale de l'au moins un premier canal d'écoulement (7) et/ou de l'au moins un deuxième canal d'écoulement (8) de la cellule d'électrolyse (1) est conçue de façon à rétrécir ou à s'élargir le long de l'axe de cellule (6).

2. Cellule d'électrolyse (1) selon la revendication 1, **caractérisée en ce que** le premier et/ou le deuxième cadre de cellule (3, 4) présente un bord de délimitation intérieur (13), qui définit une section de délimitation de la zone intérieure (5), ce bord de délimitation intérieur (13) présentant, par rapport à un plan de cadre (14) s'étendant verticalement du premier et/ou du deuxième cadre de cellule (3, 4), dans la zone supérieure et/ou dans la zone inférieure, une section partielle rectiligne supérieure et/ou inférieure (15a, 15b), au moins un canal partiel (12f) de la structure de canal d'entrée (10) s'étendant, parallèlement ou en alignement avec la section partielle rectiligne inférieure (15b), dans la section partielle rectiligne inférieure (15b), et au moins un canal partiel (12a) de la structure de canal de sortie (9) s'étendant, parallèlement ou en alignement avec la section partielle rectiligne supérieure (15a), dans la section partielle rectiligne supérieure (15a).

3. Cellule d'électrolyse (1) selon l'une des revendications précédentes, **caractérisée en ce qu'**au moins un canal partiel (12a) de la structure de canal de sortie (9) est couplé de manière fluidique à la zone intérieure (5) du premier et/ou du deuxième cadre de cellule (3, 4) par rapport au plan de cadre (14) s'étendant verticalement au niveau d'une section partielle supérieure du bord de délimitation intérieur (13) avec la zone intérieure (5).

4. Cellule d'électrolyse (1) selon l'une des revendications précédentes, **caractérisée en ce que** l'au moins un premier cadre de cellule (3) et l'au moins un deuxième cadre de cellule (4) sont conçus de manières structurellement et géométriquement identiques et sont disposés de façon à être pivotés de 180° par rapport à un axe vertical (16) s'étendant dans le plan de cadre (14) s'étendant verticalement.

5. Cellule d'électrolyse (1) selon l'une des revendications précédentes, **caractérisée en ce que** l'au moins un premier cadre de cellule (3) et l'au moins un deuxième cadre de cellule (4) présentent chacun une structure de canal de sortie (9) et chacun une structure de canal d'entrée (10) et **en ce que** la structure de canal de sortie (9) respective et la structure de canal d'entrée (10) respective du cadre de cellule respectif (3, 4) sont constituées de creux (17) en forme de rainures ou d'empreintes correspondantes dans une seule des deux faces planes du cadre de cellule respectif (3, 4).

6. Cellule d'électrolyse (1) selon la revendication 5, **caractérisée en ce que** l'au moins un premier cadre de cellule (3) et l'au moins un deuxième cadre de cellule (4) sont disposés par rapport à la membrane échangeuse d'anions (2) de sorte que la face plane respective des cadres de cellule (3, 4) sans creux (17) en forme de rainures ou empreintes est disposée le plus près de la membrane échangeuse d'anions (2).

7. Cellule d'électrolyse (1) selon la revendication 6, **caractérisée en ce que** la membrane échangeuse d'anions (2) est reliée, de manière étanche aux liquides et aux gaz, à la face plane disposée le plus près de l'au moins un premier cadre de cellule (3) et/ou de l'au moins un deuxième cadre de cellule (4) par collage, soudage et/ou compression.

8. Cellule d'électrolyse (1) selon l'une des revendications précédentes, **caractérisée en ce que** le bord de délimitation intérieur (13) du premier et/ou du deuxième cadre de cellule (3, 4) présente par endroits une forme d'arc de cercle ou une forme d'ellipse, et dans le cas d'une forme d'ellipse, son grand axe d'ellipse ou son petit axe d'ellipse est orienté parallèlement ou globalement parallèlement à l'axe vertical (16).

9. Cellule d'électrolyse (1) selon l'une des revendications précédentes, **caractérisée en ce que** l'au moins un premier canal d'écoulement (7) est réalisé de façon à s'élargir dans une première direction de canal d'écoulement (18) le long de l'axe de cellule (6) et **en ce que** l'au moins un deuxième canal d'écoulement (8) est réalisé de façon à rétrécir dans une deuxième direction de canal d'écoulement (19) opposée à la première direction de canal d'écoulement (18).

10. Cellule d'électrolyse (1) selon l'une des revendications précédentes, **caractérisée en ce que** la section d'écoulement d'au moins un canal partiel (12) de la structure de canal de sortie (9) et/ou de la structure de canal d'entrée (10) présente un élargissement (20) partant du canal d'écoulement respectif (7, 8) en direction de la zone intérieure (5), cet élargissement (20) étant réalisé plus particulièrement avec une forme évasée.

11. Cellule d'électrolyse (1) selon l'une des revendications précédentes, **caractérisée en ce que** les au moins deux canaux partiels (12a, 12b) de la structure de canal de sortie (9) et/ou les au moins deux canaux partiels (12d, 12f) de la structure de canal d'entrée (10) s'étendent selon un angle (11) compris entre 27,5° et 135°, plus particulièrement selon un angle (11) de 90°, l'un par rapport à l'autre, et **en ce qu'**au moins un troisième canal partiel (12b) est disposé entre les au moins deux canaux partiels (12a, 12b) de la structure de canal de sortie (9) et/ou au moins un troisième canal partiel (12e) est disposé entre les au moins deux canaux partiels (12d, 12f) de la structure de canal d'entrée (10).

12. Cellule d'électrolyse (1) selon l'une des revendications précédentes, **caractérisée en ce que**, le long du bord de délimitation intérieur (13) de l'au moins un premier cadre de cellule (3) et/ou de l'au moins un deuxième cadre de cellule (4) par rapport à la surface de base du cadre de cellule respectif (3, 4), est formée au moins une protubérance (21), fermée sur son pourtour et englobant la structure de canal de sortie (9) et/ou la structure de canal d'entrée (10) est formée, cette au moins une protubérance (21) étant prévue comme élément d'étanchéité (22).

13. Cellule d'électrolyse (1) selon la revendication 12, **caractérisée en ce que** l'au moins une protubérance (21) fermée sur son pourtour est formée sur au moins une face plane de l'au moins un premier cadre de cellule (3) et/ou de l'au moins un deuxième cadre de cellule (4) et présente une hauteur d'environ 1 % à 20 %, de préférence d'environ 10 %, de l'extension de l'épaisseur dans la direction de l'axe de cellule (6) d'un joint plat (23) en forme de plaque, disposé le plus près le long de l'axe de cellule (6) sur chacune de cette au moins une face plane.

14. Cellule d'électrolyse (1) selon l'une des revendications précédentes, **caractérisée en ce que** l'au moins un premier cadre de cellule (3) et/ou l'au moins un deuxième cadre de cellule (4) présente sur une seule face plane ou sur les deux faces planes opposées des sections de surface isolées et/ou contiguës avec une rugosité de surface supérieure à celle du reste de la surface.

15. Cellule d'électrolyse (1) selon l'une des revendications précédentes, **caractérisée en ce que** les zones intermédiaires de canaux partiels (24) entre les canaux partiels (12a, 12c, 12d, 12f) présentent une rugosité de surface supérieure à celle du reste de la surface de l'au moins un premier cadre de cellule (3) et/ou de l'au moins un deuxième cadre de cellule (4) sur la face plane avec les creux (17) en forme de rainure.

16. Cellule d'électrolyse (1) selon l'une des revendications précédentes, **caractérisée en ce que** l'au moins un premier canal d'écoulement (7) et/ou l'au moins un deuxième canal d'écoulement (8) sont formés par des ouvertures elliptiques en communication fluidique au moins dans les premier et deuxième cadres de cellule (3, 4) et dans la membrane échangeuse d'anions (2).

17. Cellule d'électrolyse (1) selon l'une des revendications précédentes, **caractérisée en ce que** l'au moins un premier cadre de cellule (3) et/ou l'au moins un deuxième cadre de cellule (4) peut/peuvent être réalisé(s) d'une seule pièce ou intégralement en matière plastique, plus particulièrement par moulage par injection.

18. Cellule d'électrolyse (1) selon la revendication 17, **caractérisée en ce que** les ouvertures pour la formation de l'au moins un premier canal d'écoulement (7) et/ou de l'au moins un deuxième canal d'écoulement (8) et/ou les canaux partiels (12) et/ou la protubérance (21) fermée sur son pourtour peuvent/peut être réalisé(s) d'une seule pièce ou intégralement dans l'au moins un premier cadre de cellule (3) et/ou dans l'au moins un deuxième cadre de cellule (4).

19. Procédé de fabrication d'au moins un canal d'écoulement (7, 8) s'étendant le long de l'axe de cellule (6) à travers au moins deux cellules d'électrolyse (1a, 1b) disposées le long de l'axe de cellule (6) selon l'une des revendications précédentes, dans lequel
- au moins les cellules d'électrolyse (1a, 1b) sont disposées en série le long de l'axe de cellule (6) et sont maintenues entre elles le long de l'axe de cellule (6),
- et, au moyen d'un dispositif de perçage, l'au moins un canal d'écoulement (7, 8) est formé de manière à se rétrécir ou à s'élargir le long de l'axe de cellule (6).
